(19) **Europäisches Patentamt / European Patent Office / Office européen des brevets**

(11) **EP 4 610 715 A1**

(12) # EUROPEAN PATENT APPLICATION

(43) Date of publication:
03.09.2025  Bulletin 2025/36

(21) Application number: 25160227.2

(22) Date of filing: 26.02.2025

(51) International Patent Classification (IPC):
*G02B 27/01* (2006.01)

(52) Cooperative Patent Classification (CPC):
**G02B 27/0172;** G02B 2027/0123; G02B 2027/0147;
G02B 2027/0178

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  29.02.2024  US 202463559715 P

(71) Applicant: Oomii Inc.
Grand Cayman KY1-1208 (KY)

(72) Inventors:
• **Cheng, Ken-Yu**
**23144 New Taipei City (TW)**
• **Tsai, Ming-Hsien**
**23144 New Taipei City (TW)**
• **Yeh, Feng-Chun**
**23144 New Taipei City (TW)**

(74) Representative: **Michalski Hüttermann & Partner
Patentanwälte mbB
Kaistraße 16A
40221 Düsseldorf (DE)**

(54)  ## HEAD WEARABLE DISPLAY SYSTEM FOR ENHANCING VISUAL ACUITY

(57)  A head wearable display system comprising a target object detection module receiving a plurality of image pixels of a first portion and a second portion of a target object, and corresponding depths of the first portion and the second portion; a first light emitter emitting a plurality of first-eye light signals to display a first-eye virtual image of the first portion and the second portion of the target object for a viewer; a first light direction modifier for respectively varying a light direction of each of the plurality of first-eye light signals emitted from the first light emitter; a first collimator, disposed between the first light emitter and the first light direction modifier, to adjust a beam waist location of each of the plurality of first-eye light signals so that the plurality of first-eye light signals being separable from each other; a first focusing element, disposed between the first collimator and the first light direction modifier, to adjust a beam waist size of each of the plurality of first-eye light signals, so as to adjust spot sizes of the plurality of first-eye light signals on a first eye of the viewer; and a first combiner, for redirecting and converging the plurality of first-eye light signals towards the first eye of the viewer. The first-eye virtual image of the first portion of the target object in a first field of view has a greater number of the plurality of first-eye light signals per degree than that of the first-eye virtual image of the second portion of the target object in a second field of view.

EP 4 610 715 A1

**Description**

BACKGROUND OF THE INVENTION

Field of the Invention

The present invention relates to a system providing enhanced visual acuity; more specifically, a head wearable display system that may produce machine assisted vision acuity greater than 10 with depth perception.

Description of Related Art

Vision capability is often limited by the anatomy of human eyes. Particularly, parameters such as the refractive diopter of the lens of the eye, the axial length of the eyeball, as well as the condition of the cornea and retina . . . etc. greatly affect the vision ability. There has not been machine vision provided for achieving higher than normal vision capability available to the general market. Furthermore, in recent years, machine vision has been developed and adapted to many industry segments to improve people with vision impairment. Particularly, machine vision had been applied to medical field for aiding patients with no focusing ability or vision defect conditions such as glaucoma and myopic macular degeneration. For example, augmentation of a pixelized image can aid the patient in eyesight recovery by increasing the intensity or contrast of an object which the patient is viewing. However, this can only partially repair the vision of the patient.

Therefore, there is a need to provide a head wearable display device which is convenient for daily use and may partially or substantially replace human natural vision by providing users with vision acuity beyond normal human vision.

SUMMARY

The idea of the present invention is to use light signal scanning based light emitting device on head wearable display system/devices (e.g., AR eyeglasses or VR goggle) or retinal scanning devices to aid people with visual incapability or impairment back to normal life. Particularly, the present invention is able to capture real time image information of a target object or the surrounding environment the viewer to be viewed by a viewer and reproduce a 3-dimensional digital (or pixelized) image having depth perception to the viewer. Furthermore, the present invention may replace the traditional prescription eyeglasses to perform vision correction for people having myopia or presbyopia . . . etc. The present invention can also improve eyesight exceeding normal visual capability for healthy people.

The head wearable display system comprises a target object detection module, a first light emitter, a first light direction modifier, a first collimator, a first focusing element, and a first combiner. The target object detection module is used for receiving a plurality of image pixels of a first portion and a second portion of a target object, and corresponding depths of the first portion and the second portion. The first light emitter is used for emitting a plurality of first-eye light signals related to the target object to display a first-eye virtual image of the first portion and the second portion of the target object for a viewer. For example, the plurality of first-eye light signals may directly reproduce the image pixels of the target object such that the viewer can see the first-eye virtual image of the target object via the head wearable display system. The first light emitter may be capable of producing light pulse to create pixelized images. In some instance, the light emitter may comprise a red laser diode, a green laser diode, and a blue laser diode. The first light direction modifier receives the plurality of first-eye light signals emitted by the first light emitter and varies a light direction of each of the plurality of first-eye light signals emitted from the first light emitter. The light direction may be varied with respect to time in a plurality of spatial dimensions such that an image is created via the cyclical scanning motion of the first light direction modifier to create an image frame within a period of time. The light direction modifier mentioned in the present invention may refer to mechanical or optical elements capable of dynamically changing the direction of light emitted by a light emitter with respect to time. The first collimator may be disposed between the first light emitter and the first light direction modifier for adjusting a beam waist location of each of the plurality of first-eye light signals so that the plurality of first-eye light signals being separable from each other, making the plurality of first-eye light signals from the first light emitter collimated. In another embodiment, the first collimator may be disposed between the first light direction modifier and the first combiner. Furthermore, the first collimator may change the optical path lengths of the first-eye light signals. The first focusing element is disposed between the first collimator and the first light direction modifier to adjust a beam waist size of each of the plurality of first-eye light signals, so as to adjust spot sizes of the plurality of first-eye light signals on a first eye of the viewer. Specifically, the first focusing element may focus the plurality of first-eye light signals from the first collimator to adjust a beam waist of each of the plurality of first-eye light signals, so that the beam waists of the plurality of first-eye light signals emitted by the first light direction modifier are adjusted.

The first combiner is used for redirecting and converging the plurality of first-eye light signals towards the first eye of the viewer. In some embodiments, the first combiner receives the plurality of first-eye light signals from the first light direction modifier and converges and directs the plurality of first-eye light signals into the first eye of the viewer. The first light direction modifier may be rotating within a range of angles or move within a range of linear displacement. The light directions of the plurality of first-eye light signals may also be varied within a certain range; when the first combiner receives the plurality of first-eye light signals from the first light direction modifier, the first combiner directs the respective first-eye light signals having different incident angles into the first eye of the viewer. The plurality of first-eye light signals are directed into the first eye of the viewer with a predetermined range of incident angles, which is equivalent to the maximum field of view (FOV) produced by the head wearable display system. In some embodiments, the spot size of the first-eye light signal projected on the retina of the first eye can be manipulated via changing the distance between the light direction modifier and the first collimator.

In one embodiment, the first focusing element comprises a radius of curvature between -5 mm and -50 mm.

In one embodiment, the plurality of first-eye light signals emitted by the first light direction modifier emits to the first combiner with a first-eye light incident angle between 15 degrees and 75 degrees.

In one embodiment, the head wearable display system further comprises a first light redirector for receiving the plurality of first-eye light signals and varying a light direction of each of the plurality of first-eye light signals; and a second light redirector disposed adjacent to a first focus of the first light redirector and a first focus of the first combiner, the second light redirector being a reflector, wherein the first light redirector receives the plurality of first-eye light signals and directs the plurality of first-eye light signals to the first combiner, the first combiner directs the plurality of first-eye light signals received from the first light redirector to the first eye of the viewer, so that the viewer sees a first image frame composed by the plurality of first-eye light signals, wherein the first light direction modifier varies projecting directions of the plurality of first-eye light signals in a first dimension between a first spatial dimension limit and a second spatial dimension limit, wherein a geometric shape of the first light redirector is configured to make the total optical path length from the first light direction modifier to the first eye of the viewer of one of the plurality of first-eye light signals emitted by the first light direction modifier approximate to the first spatial dimension limit substantially equal to the total optical path length from the first light direction modifier to the first eye of the viewer of another one of the plurality of first-eye light signals emitted by the first light direction modifier approximate to the second spatial dimension limit, wherein the first light redirector comprises two focuses located in space between the first light redirector and the first eye of the viewer, the first focus of the first light redirector and the first focus of the first combiner are at a same spatial location, wherein the first light direction modifier is adjacent to a second focus of the first light redirector, and wherein a closest distance from the first combiner to the first eye of the viewer is 15 mm to 30 mm.

In one embodiment, the plurality of first-eye light signals emitted by the first light direction modifier is emitted to the first light redirector with a first eye-light incident angle, and the first eye-light incident angle is between 15 degrees and 75 degrees.

In one embodiment, the head wearable display system further comprises: a second light emitter for emitting a plurality of second-eye light signals corresponding to the plurality of first-eye light signals to display a second-eye virtual image of the first portion and the second portion of the target object for the viewer; a second light direction modifier for respectively varying a light direction of each of the plurality of second-eye light signals emitted from the second light emitter; a second collimator, disposed between the second light emitter and the second light direction modifier, to adjust a beam waist location of each of the plurality of second-eye light signals so that the plurality of second-eye light signals being separable from each other; a second focusing element, disposed between the second collimator and the second light direction modifier, to adjust a beam waist size of each of the plurality of second-eye light signals, so as to adjust spot sizes of the plurality of second-eye light signals on a second eye of the viewer; and a second combiner for redirecting and converging the plurality of second-eye light signals towards the second eye of the viewer; wherein the second-eye virtual image of the first portion of the target object in a third FOV comprises more amount of the plurality of second-eye light signals per degree compares to the second-eye virtual image of the second portion of the target object in a fourth FOV.

In one embodiment, the second focusing element comprises a radius of curvature between -5 mm and -50 mm.

In one embodiment, the plurality of second-eye light signals emitted by the second light direction modifier emits to the second combiner with a second-eye light incident angle between 15 degrees and 75 degrees.

In one embodiment, the head wearable display system further comprises a third light redirector for receiving the plurality of second-eye light signals and varying a light direction of each of the plurality of second-eye light signals; and a fourth light redirector disposed adjacent to a first focus of the third light redirector and a first focus of the second combiner, the fourth light redirector being a reflector, wherein the third light redirector receives the plurality of second-eye light signals and directs the plurality of second-eye light signals to the second combiner, the second combiner directs the plurality of second-eye light signals received from the third light redirector to the second eye of the viewer, so that the viewer sees a second image frame composed by the plurality of second-eye light signals, wherein the second light direction modifier varies projecting directions of the plurality of second-eye light signals in a second dimension between a third spatial dimension limit and a fourth spatial dimension limit, wherein a geometric shape of the third light redirector is configured to make the total optical path length from the second light direction modifier to the second eye of the viewer of one of the plurality of second-eye light signals emitted by the second light direction modifier approximate to the third spatial dimension limit substantially equal to the total optical path length from the second light direction modifier to the second eye of the viewer of another one of the plurality of second-eye light signals emitted by the second light direction modifier approximate to the fourth spatial dimension limit, wherein the third light redirector comprises two focuses located in space between the third light redirector and the second eye of the viewer, the first focus of the third light redirector and the first focus of the second combiner are at a same spatial location, wherein the second light direction modifier is adjacent to a second focus of the third light redirector, and wherein a closest distance from the second combiner to the second eye of the viewer is 15 mm to 30 mm.

In one embodiment, wherein the plurality of second-eye light signals emitted by the second light direction modifier is emitted to the third light redirector with a second eye-light incident angle between 15 degrees and 75 degrees.

The present invention is able to capture real time image pixels of a target object or the surrounding environment and reproduces a 3-dimensional digital image having enhanced image quality to a viewer of the AR/VR system. The viewer of the present invention can adjust the image quality to achieve better than normal visual acuity (e.g., higher than 20/20 vision or VA 1.0). Furthermore, the present invention may help people with vision impairment or replace the traditional prescription eyeglasses to perform vision correction for people having myopia or hyperopia . . . etc. The present invention can be used by health care professionals, military personals, precision processing industry sectors, aerospace pilots, law enforcement personals, emergency and rescue personals, and athletes . . . etc.

BRIEF DESCRIPTION OF THE DRAWINGS

FIG. 1 is a schematic view of the Rayleigh Criterion.
FIG. 2 is a schematic view explaining the change in spot size on different planes of projection.
FIG. 3 is a schematic view of the display system in accordance to the present invention.
FIG. 4A is a schematic view explaining the effect of changing the location of the collimator.
FIG. 4B is another schematic view explaining the effect of changing the location of the collimator.
FIG. 5A is a schematic view explaining the effect of changing the light emitting duration on the spot size.
FIG. 5B is another schematic view explaining the effect of changing the light emitting duration on the spot size.
FIG. 6 is a schematic view explaining the effect of changing the spatial separation between adjacent light signals on FOV.
FIG. 7A is a schematic view explaining one embodiment of changing the spatial separation between adjacent light signals.
FIG. 7B is another schematic view explaining one embodiment of changing the spatial separation between adjacent light signals.
FIG. 7C is another schematic view explaining one embodiment of changing the spatial separation between adjacent light signals
FIG. 8 is a schematic explaining one embodiment of changing the swing frequency of the light direction modifier to change the visual acuity.
FIG. 9 is a schematic view of the display system in accordance to another embodiment of the present invention.
FIG. 10 is another schematic view of the display system in accordance to another embodiment of the present invention.
FIG. 11 is another schematic view of the display system in accordance to another embodiment of the present invention.
FIG. 12 is another schematic view of the display system in accordance to another embodiment of the present invention.
FIG. 13 is a schematic view of an embodiment of the optical assembly in accordance with the present invention.
FIG. 14 is another schematic view of an embodiment of the optical assembly in accordance with the present invention.
FIG. 15 is a schematic view for describing an application of the present invention.
FIG. 16 is a schematic view explaining yet another embodiment of the head wearable display system in accordance with the present invention.
FIG. 17 is a schematic view explaining the effect of the focusing element on the light signals.
FIGs. 18A to 18C are schematic views explaining the effect of changing radius of curvatures of focusing elements on spot sizes.
FIGs. 19A to 19C are schematic views explaining the effect of changing incident angles on spot sizes.
FIG. 20 is a schematic view explaining an embodiment of the present invention.
FIG. 21 is another schematic view explaining an embodiment of the present invention.
FIG. 22 is a schematic view explaining still another embodiment of the head wearable display system in accordance with the present invention.
FIG. 23A explains quality of the image frame in prior art.

FIG. 23B explains quality of the image frame in accordance with the present invention.

DETAILED DESCRIPTION OF PREFERRED EMBODIMENTS

The terminology used in the description presented below is intended to be interpreted in its broadest reasonable manner, even though it is used in conjunction with a detailed description of certain specific embodiments of the technology. Certain terms may even be emphasized below; however, any terminology intended to be interpreted in any restricted manner will be specifically defined as such in this Detailed Description section.

In one aspect of the present invention aims to increase human eyesight exceeding normal vision capability (supervision) for healthy persons. In another aspect, the present invention provides improved vision for persons with visual impairment such as myopia or astigmatism, or helps training the eyes with impairment to improve vision. Yet in another aspect, the present invention can substantially replace the vision for people with no focusing ability or other severe vision disabilities. The present invention may serve as a supplementary device to enhance human vision of the viewer; in some cases, the present invention may partially or near completely replace the function of human eyes for people having eye impairment. Furthermore, for viewers having eye impairment, the system and method of the present invention can bypass the damaged or impaired tissue of the eyes and provide clear image to the healthy portion of the viewers' retina. The present invention takes the axial length of the eyeball and the condition of the cornea and retina of the viewer into consideration and incorporates them into the design of the present invention; in addition, the present invention is able to provide multiple or continuous depth perception such that the viewer can perceive the highest degree of realism. The present invention is able to receive a plurality of image pixels of a distant target object and reproduce a virtual image of the target object with higher visual acuity for the viewer.

The phrase "visual acuity" relates to the number of critical gaps abled to be distinguished in an arc minute of the field of view (FOV) by the viewer. The general definition of visual acuity (VA) is given by the following formula:

$$\text{visual acuity} = 1/\text{gap size (in arc minute)};$$

and

$$1 \text{ arc minute} = 1/60 \text{ of a degree}$$

For VA of 1.0 (or 20/20), the eyes of the viewer need to be able to distinguish a contrast pattern (e.g., black and white pattern) within 1 arc minute of the FOV. In other words, for VA of 1.0, the eyes of the viewer can distinguish 60 contrast patterns within 1 degree of the FOV. For example, if a person can only distinguish a contrast pattern within 2 arc minute of the FOV, the VA is 0.5. VA described in the present invention is related to a number of distinguishable/separable pixels to the retina within the range of 1 arc minute, which is 1/60 degree of the FOV. In other words, to achieve better than normal VA (which is VA 1.0) with a pixelized display system, the goal is to project an image of at least a portion of a target object having increased number of distinguishable pixels for the retina per degree of the FOV to the viewer; or the goal is to project an image of the target object having more than 60 distinguishable light signals/pixels for the retina per degree of the FOV, and the image comprises at least a portion of a virtual image of the target object. Or, in some instances of the present application, the goal is to project an image of the target object having more than 120 (VA 2.0) or 180 (VA 3.0) distinguishable light signals/pixels for the retina per degree of the FOV containing the at least a portion of a virtual image of the target object. That is to say, to achieve the best VA possible, it is necessary to project the highest possible number of distinguishable/separable pixels on the retina of the viewer's eyes. The spatial separation between any two adjacent (neighboring) pixels determines whether they are distinguishable on the retina. The spatial separation between any two adjacent (neighboring) pixels on the retina (or other portions of the viewer's eye) needs to meet a series of criteria related to the VA. In addition, in order to project increased number of distinguishable pixels for the retina within 1 arc minute range of the FOV, a cross-sectional area of the pixels need to be reduced, so that more pixels can be contained within 1 arc minute range of the FOV.

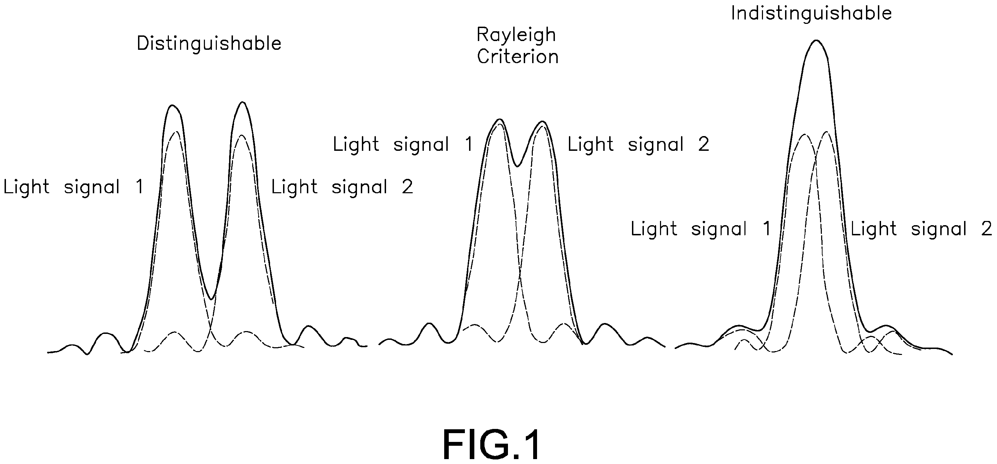

With reference to FIG. 1, regardless the distance and size of the target object intended to be reproduced for the viewer by the present invention, the reproduced image of the target object needs to be distinguished on the retina of the viewer. More specifically, the light signals (light pulse signals or light beam signals) producing the image need to fulfill Rayleigh Criterion, which is known as the specification for the minimum separation between two light signals that may be resolved to be distinguishable/separable. In a pixelized display system, the light signals correspond to the pixels that produce the virtual image. For example, each light signal may comprise a pixel of the image of the target object. And each light signal may have a near circular or elliptical cross-sectional area (also known as "spot size") when projected onto a cross-sectional plane of light path (e.g. the retina of the viewer's eye). According to the Rayleigh Criterion, the spatial distance/separation between the centers of the two adjacent light signals needs to be greater than half of the greatest diameter (approximately half spot size) of the adjacent light signals in order to allow the two light signals distinguishable. Based upon the above reasons, although it is actionable to increase the number of light signals in a unit (e.g. per degree) of FOV to increase VA, the separation between two adjacent light signals needs to be maintained to fulfill Rayleigh Criterion in order for two adjacent light signals to be distinguishable/separable. Due to this reason, increasing the VA for the viewer cannot be accomplished only by raising the resolution (it would cause the separation between the two adjacent light signals reduced). In the meantime of changing spot sizes of light signals, it is also very important to maintain enough spatial distance/separation between centers of two adjacent light signals. If the spatial distance/separation between centers of two adjacent light signals is too large, the image quality (i.e. resolution) might decline. Obviously, in order to make the VA greater than 1.0, it is necessary to maintain proper spot sizes and spatial distance/separation between light signals.

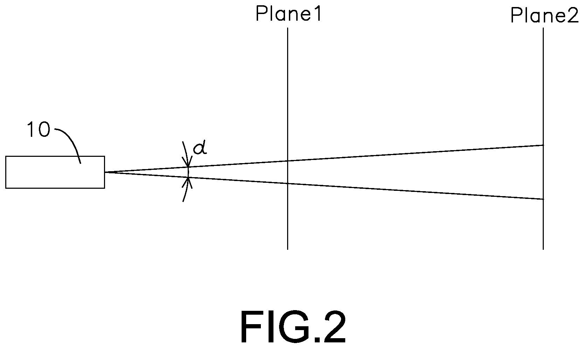

The spot size of a light signal relates to a dispersion angle and a vertical distance between the light emitter and the projection plane. With reference to FIG. 2, with constant dispersion angle $\alpha$ throughout the light path, the spot size projected on the projection plane increases as the vertical distance between the light emitter and the projection plane increases (spot size on Plane 1 is smaller than spot size on Plane 2 ). Similarly, with a constant vertical distance between the light emitter and the projection plane, the spot size increases as the dispersion angle increases. In the present invention, the final dispersion angle of the light signal entering the eyes and the optical length between the light emitter and the retina of the viewer can be modified with several methods, which will be described in more details below.

In order to make VA higher than normal human vision, a number of distinguishable light signals (e.g. pixels) projected onto a unit area of retina (i.e. pixel density) needs more than the number it required for a natural vision. The number of light signals projected onto the unit area of the retina is directly proportional to the number of light signals and the FOV (measured in degrees) that contains those light signals; that is, it is positively correlated with the VA perceived by the viewer. In other words, the VA perceived by the viewer is positively correlated with the number of distinguishable light signals per degree of the FOV. Therefore, by increasing the number of distinguishable light signals projected onto each degree of the viewer's retina, the VA perceived by the viewer can be enhanced.

In the present invention, the system and method for enhancing VA is provided to increase number of distinguishable and separable light signals projected in a unit angle of FOV (which is measured in degrees) to the maximum extent, so as to create a image frame having a maximum number of distinguishable signals in a unit area on the retina, which also has a maximum FOV and light signals density at the same time. In one embodiment of the present invention, the system and method for enhancing VA may be implemented as a head wearable display system such as AR/VR glasses, AR/VR helmet, or other similar commercial or medical devices. In some other instances, the present invention may be applied to other stationary or non-head wearable display devices. The following uses a head wearable display system for the purpose of explaining the embodiments of the present invention; furthermore, the head wearable display system may provide pixelized images to the viewer; therefore, the light signals projected by the light emitter may correspond to the pixels of the images. However, the present invention is not limited to this embodiment.

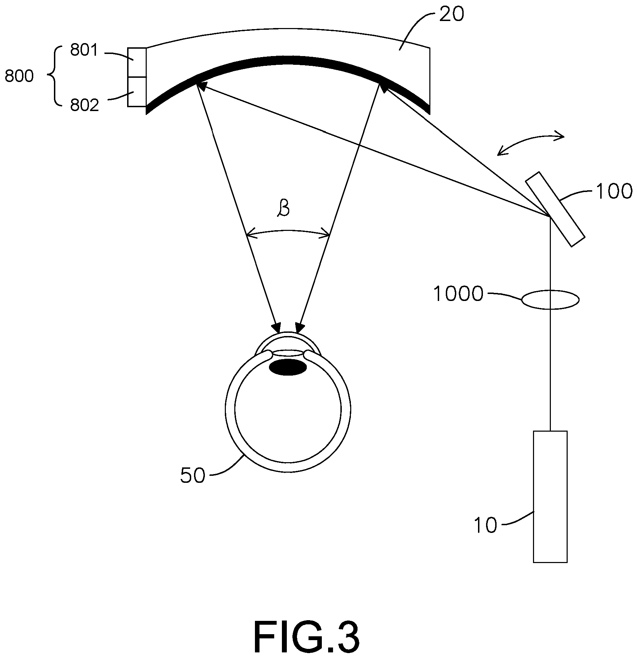

With reference to FIG. 3, the head wearable display system comprises a target object detection module 800, a first light emitter 10, a first light direction modifier 100, a first collimator 1000, and a first combiner 20. The target object detection module 800 receives a plurality of image pixels of a first portion and a second portion of a target object. The target object may be the surrounding environment of the viewer, a portion of the surrounding environment, or a specific object in the surrounding environment. The target object detection module 800 may further comprise a distance detection unit 801 for determining a depth of the target object or at least a portion of the target object. For presenting a complete 3-dimensional virtual image of the target object, the target object detection module 800 and the distance detection unit 801 may measure a plurality of points on the target object and create a 3-dimenstional profile of the target object so a 3-dimensional virtual image of the target object may be produced later.

To achieve a better shooting angle, the target object detection module 800 is adjustably mounted on the frame of the head wearable display system. For example, the target object detection module 800 has a sliding structure that is inserted into the frame, allowing the target object detection module 800 to slide along a track. The target object detection module 800 is powered by a power cord within the track, and the image data captured by the target object detection module 800 is transmitted along with the data line within the track.

In another embodiment, the target object detection module 800 is attached to the frame of the head wearable display system via a pivot joint. More specifically, the frame is physically connected to the target object detection module 800 through the pivot joint. This pivot joint allows the target object detection module 800 to rotate, enabling a facing direction of the target object detection module 800 to be adjusted according to the application scenario. In the current embodiment, the viewer can adjust the target object detection module 800 to align with the entire face to capture facial expressions or to align outward to capture environmental images. The adjustable design allows the target object detection module 800 to capture the viewer's facial features in a better way based on various changes in face shape and/or size.

The first light emitter 10 emits a plurality of first-eye light signals related to the target object. For example, the plurality of first-eye light signals may directly regenerate image pixels of the target object, so that the viewer may see a first-eye virtual image of the target object via the head wearable display system. The first light emitter 10 may be capable of producing light pulses to create pixelized images. For instance, the first light emitter 10 may be a laser emitter capable of emitting a light signal or pixel at a time. For example, in some cases, the light emitter may comprise a red laser diode, a green laser diode, and a blue laser diode. The first light direction modifier 100 receives the plurality of first-eye light signals emitted by the first light emitter 10 and varies a light direction of these plurality of first-eye light signals from the first light emitter 10. The light direction may be varied with respect to time in a plurality of spatial dimensions such that an image is created via the cyclical scanning motion of the first light direction modifier 100 to create an image frame within a period of time. The light direction modifier in the present invention may refer to mechanical or optical elements capable of dynamically changing the direction of light emitted by a light emitter with respect to time. An example of which may be, but not limited to, microelectromechanical systems (MEMS) mirrors. The first collimator 1000 may be disposed between the first light emitter 10 and the first light direction modifier 100 for collimating the plurality of first-eye light signals from the first light emitter 10. In another embodiment, the first collimator 1000 may be disposed between the first light direction modifier 100 and the first combiner 20. Furthermore, the first collimator 1000 may change optical paths of the first-eye light signals.

The first combiner 20 is provided for redirecting and converging the plurality of first-eye light signals towards a first eye of the viewer. In some embodiments, the first combiner 20 receives the plurality of first-eye light signals from the first light direction modifier 100 and redirects and converges the plurality of first-eye light signals into a viewer's first eye 50. More specifically, as an example, the first light direction modifier 100 may be rotating within a range of angles or moving within a range of linear displacement. As a result, the light direction of the plurality of first-eye light signals may also be varied within a certain range; when the first combiner 20 receives the plurality of first-eye light signals (each of which having a different incident angle) from the first light direction modifier 100, the first combiner 20 redirects the respective first-eye light signals having different incident angles into a first eye 50 of the viewer. Since the rotation or linear displacement of the first light direction modifier 100 is predetermined, as a result, the plurality of first-eye light signals are directed into the first eye 50 of the viewer with a predetermined range of incident angles, which is equivalent to the maximum FOV produced by the head wearable display system.

In some embodiments of the present invention, the head wearable display system may have a dual-axes design for the combiner so that the pitch and roll (rotational angle along the horizontal direction and vertical direction) of the combiner can be adjusted. Furthermore, the X, Y, and Z position of the combiner may also be adjusted so as to fit the interpupillary distance of each viewer. In some other embodiments, the X, Y, and Z position of the combiner can also be individually adjusted for viewers.

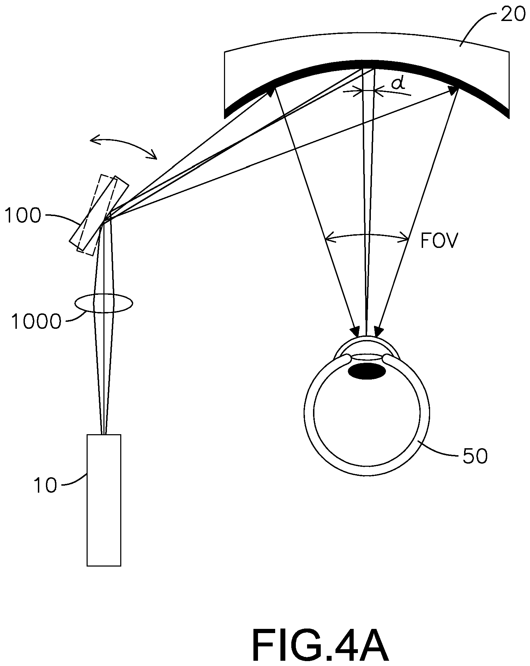

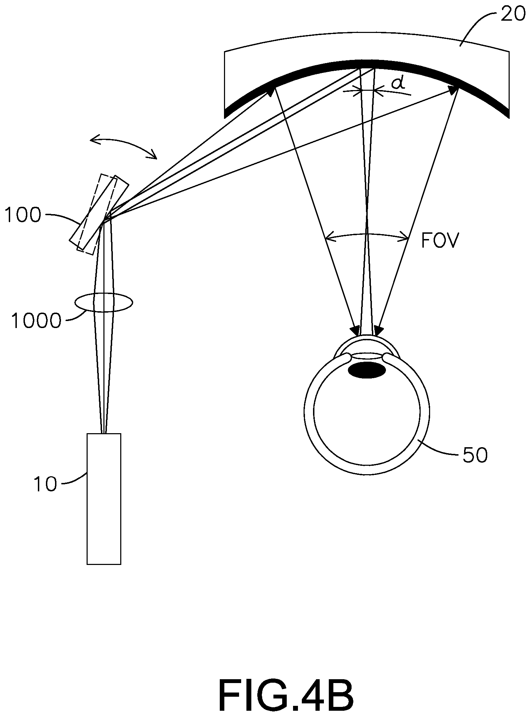

With reference to FIGs. 4A-4B, the dispersion angles of each of the light signals traveling from the first combiner 20 to the first eye 50 determine spot sizes of the light signals presented on the retina of the viewer. The spot size increases as the dispersion angle increases, and vice versa. According to one embodiment, the spot size of the first-eye light signal projected on the retina may be controlled by changing the distance between the first light direction modifier 100 and the first collimator 1000. With reference to FIGs. 4A-4B, the figures explain how changing the distance between the first light direction modifier 100 and the first collimator 1000 affects the spot size. The light beams in the figures represent the optical path of a single light signal projected by the first light emitter 10. Throughout the optical path (light path) of the first-eye light signal traveling from the first light emitter 10 to the first eye 50 of the viewer, the light beam of the first-eye light signal undergoes several diverging/converging cycles. The cross-sectional area of the light beam (which is equivalent to the spot size) varies along different locations of the optical path. In other words, the spot size is different at different locations of the optical path. By changing the total optical path between the light emitter and the eyes of the viewer, the cross-sectional area projected onto the retina of the viewer is varied, thereby, changing the spot size. It is apparent that the spot size perceived by the viewer's eye may also depend on the specification of the eye of each individual viewer, such as the total dioptric power of the eyes, the axial length, and the condition of retina . . . etc. These factors need to be taken into consideration when an initial calibration is performed for different users/viewers. In both FIGs. 4A and 4B, the first-eye light signal converges gradually after emerging from the first combiner 20 but form beam waist (where the cross-sectional area of the beam is minimum) at different locations. In FIG. 4A, the light signal forms beam waist and diverges prior to incident on the first combiner 20. The light signal converges again after being reflected by the first combiner 20 prior to entering the first eye 50 of the viewer. In FIG. 4B, the beam waist is formed between the first combiner 20 and the first eye 50 of the viewer. As a result, the spot size of the first-eye light signals provided to the viewer's first eye 50 in these two figures are different. In this embodiment, the location of the beam waist can be adjusted by changing the location of the first collimator 1000, so that the spot size of the plurality of first-eye light signals projected on the viewer's first eye 50 (e.g., the retina) is adjusted such that the plurality of first-eye light signals are separable and distinguishable according to Rayleigh Criterion. In some other instances, the location of the beam waist can be adjusted by changing the distance between the first light direction modifier 100 and the first collimator 1000. Evidently, by manipulating the distance between the first light direction modifier 100 and the first collimator 1000, most suitable spot size and beam separation may be evaluated and determined for viewers having different eye conditions. In general, the curvature of the collimator and the combiner may be customized for different users as these parameters may also affect the spot size. Furthermore, since the spot size in these two figures are different, the spatial distance/separation between the centers of two adjacent first-eye light signals may also be different.

The following describes several methods for modifying the ratio of the number of light signals in the FOV (the ratio is measured by the number of first-eye light signals per degree) of the viewer to change the VA perceived by the viewer. These methods involve modifying the spot size of the light signals, as well as the spatial separation between adjacent light signals.

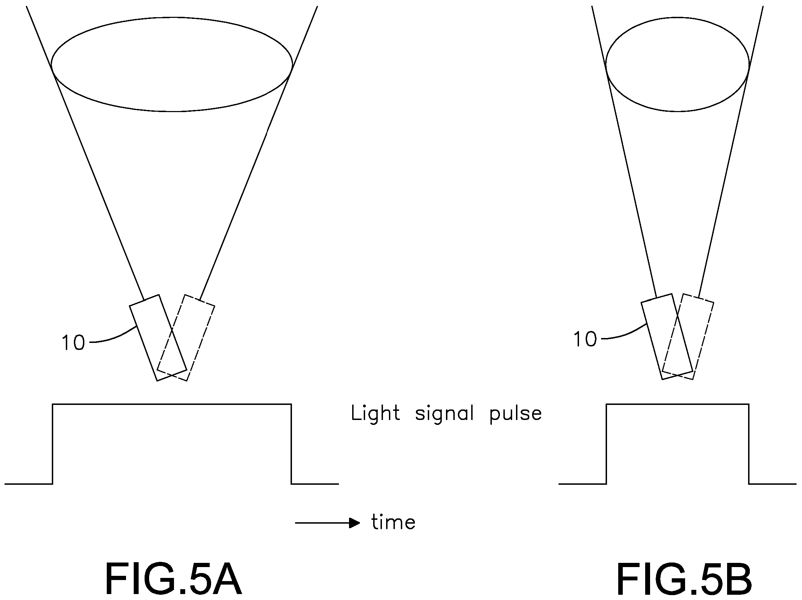

With reference to FIGs. 5A and 5B, in one embodiment, the spot size can be adjusted by varying the projection duration of a single pixel (e.g., via means of control software). The light emitter produces an image frame by projecting one light signal/pixel of the image at a time; the light emitter, via the motion of the light direction modifier, then alters the location of projection to produce another pixel of the image at a new location. Therefore, if the projection duration of the light signal is decreased, the width of the pixel in the direction of rotating of the light direction modifier will also decrease; if the projection duration of the light signal is increased, the width of the pixel in the direction of rotating of the light direction modifier will also increase. As a result, the spot size can be adjusted in real-time to fulfill Rayleigh criterion for different VA settings. In some variation of the present embodiment, the projection duration can be affectively increased by repeatedly projecting the same pixel or image pixels in different rows or columns of pixels. In FIG. 5A, the light emission pulse has a longer projection duration relative to that of FIG. 5B. With the same swing frequency of the light direction modifier between FIGS. 5A and 5B, longer projection duration allows the light signals to sweep across a greater area, which results in larger spot size for the light signal.

Considering that changing the spot size will also change the separation between each of the light signals, therefore there is a need to cope with the increasing or decreasing distance between each of the light signals. The following describes different embodiments for changing the separation between each of the light signals.

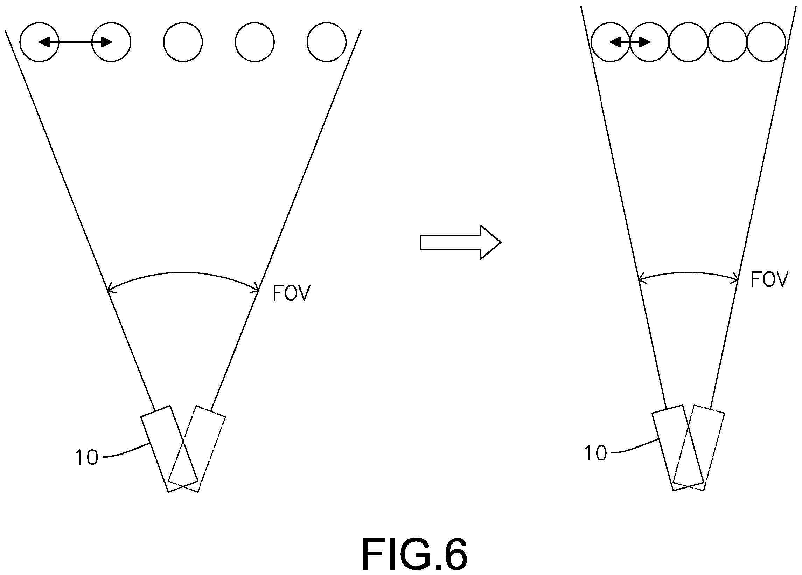

According to one embodiment of the present invention, the rate at which the light direction modifier changes directions (i.e., swing frequency) can be modified to alter the distance between each of the light signals projected. As mentioned earlier, the light direction modifier in the present invention may be able to change the direction of light in one axis or two separate axes (e.g., 2-dimensional MEMS mirror). As an example, a 2-dimensional MEMS mirror may be able to deflect light signals to optical scanning angles of up to approximately 30° at high speeds in both axes. However, the maximum scanning angle in one axis may be larger (main scanning axis) than the other (sub scanning axis). The swing frequency or swing amplitude of the MEMS mirror may be controlled by respectively applying different frequency of driving voltage/electromagnetic field and different amplitude of driving voltage/electromagnetic field to the MEMS mirror, which is readily well known in the art. According to this embodiment, the first light direction modifier 100 varies the first coordinate component or the second coordinate component of the plurality of first-eye light signals with non-constant swing frequency (or swing rate, which is how fast the light direction modifier rotates or moves with respect to a reference). The first coordinate component or the second coordinate component may be the x coordinate component or the y coordinate component in the Cartesian coordinate system, or $\theta$ coordinate component and $\varphi$ coordinate component in the polar coordinate system. When the present invention displays an image with higher VA setting, the spot size of the light signal may be decreased. The swing rate of the first light direction modifier 100 can be decreased such that each of the adjacent light signals can be projected at smaller angular displacement, which in turns causes the light signals projected on the retina of the viewer to be closer (with reference to FIG. 6). As a result, the number of light signals projected per unit (e.g. per degree) of FOA increases, causing the VA perceived by the viewer to increase. The swing angle of the light direction modifier is constant, consequently, a virtual image frame having the same frame size but with larger light signal density is produced.

As shown in FIG. 6, to cope with decreased in the swing frequency while maintaining the same frame rate for image projection, the scanning area of the light direction modifier can be reduced. This in turns causes the FOV to be reduced after the spatial separation between each of the light signals projected is reduced. However, reduction in FOV can actually enhance VA.

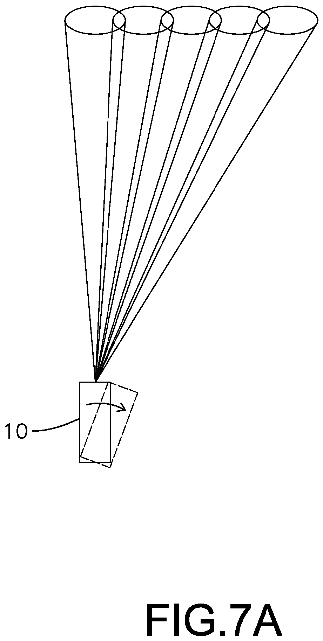

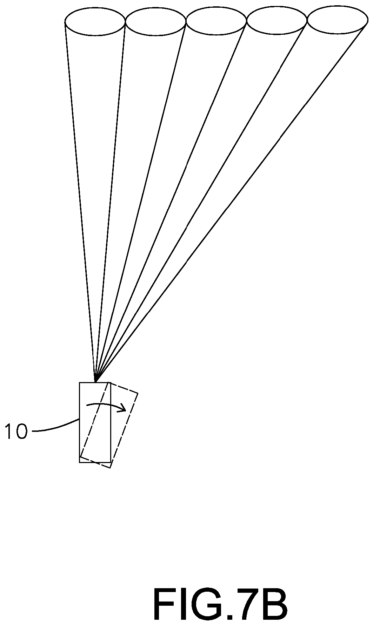

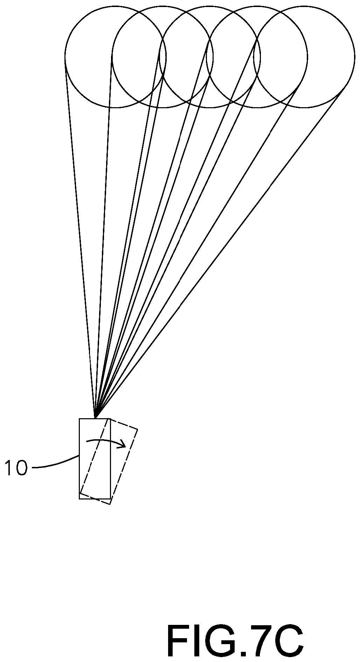

As shown in FIGs. 7A, 7B, and 7C, in an embodiment of the present invention, the sizes of plurality of first-eye light signals can be adjusted so that there is little to no separation between any two adjacent first-eye light signals. When the light signals are projected onto the cross-section of the light path, a light spot area is generated. As illustrated in FIG. 7B, the light spot areas of two adjacent light signals on the cross-section of the light path are interconnected. Therefore, there is no need to change the swing frequency of the light direction modifier or the emission frequency of the light emitter. However, in the present embodiment, because the minimum light spot size is limited, the highest VA is also constrained. It should be noted that FIGs. 7A and 7C are used to illustrate that there can also be overlaps between adjacent light signals (e.g., first-eye light signals), as long as it meets the Rayleigh Criterion, the human eye can still distinguish between the two signals.

In order to maintain a sufficient frame rate, in another embodiment of the present invention, only a portion of the virtual image frame is projected with higher number of light signals per unit (e.g. per degree) of the FOA (which is higher VA). The idea behind the present embodiment is when a human eye views a target object, the visual axis of the eye is directed to the target object, causing the image of the target object being concentrated on the macula of the eye (which is the most sensitive part of the retina); and thus, the target object appears to be in the central FOV of the vision. Relative to the target object in the image, other portions of the image may become less clear since these portions of the image may be projected to other parts of the retina that are less sensitive to the light. Based upon the nature of human vision described above, the present invention provides a central FOV (or first FOV) representing the first portion (which is the center portion) of a virtual image frame of the target object with a higher number of light signals per degree of FOV relative to the peripheral FOV (or second FOV) representing the second portion (which is the peripheral portion) of the virtual image frame of the target object, so the user of the present invention can see the central FOV of the target object with higher pixel density (higher VA); whereas the image in the peripheral FOV of the target object does not need to be as clear as the central FOV since the human eye would not be able to perceive higher quality image in the peripheral FOV anyway. In other words, the first portion of the target object in the first FOV has a greater number of the plurality of first-eye light signals per degree than the number of which the second portion of the target object in the second FOV has. In one embodiment, the number of light signals (or pixels) projected in the central FOV can be manipulated by varying the swing frequency of light direction modifier when the first light emitter 10 is projecting light signals for the central FOV. In addition to varying the swing frequency, the number of light signals (or pixels) projected in the central FOV can be further varied by modifying the projection frequency or the projection duration of the light signals, as mentioned earlier. By implementing these methods, the time it takes for the light emitter to produce a frame (frame rate) can be kept at a higher rate. The resulting virtual image created by this method will have inconsistent pixel density.

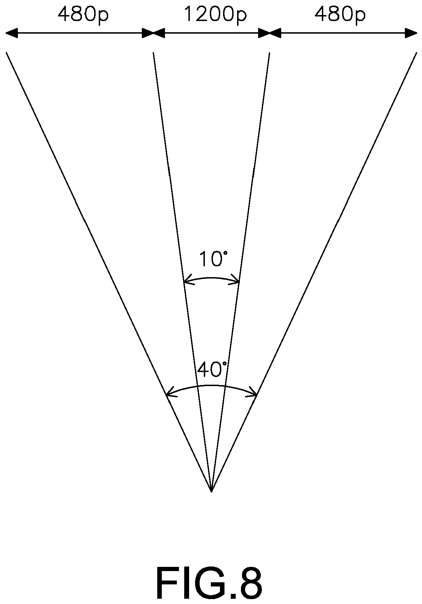

For example, under a normal condition (when the swing frequency is at the default value), the first light emitter 10 and the first light direction modifier 100 may be capable of forming an image frame consisted of a default resolution (e.g., 1280×720 pixels) within a first spatial range (e.g., 40 degrees in the horizontal or 22.5 degrees in the vertical direction). The spatial range mentioned in the present discloser represent a range of in both first coordinate component and the second coordinate component, which may be expressed with two coordinates. In the present embodiment, the first spatial range corresponds to the FOV of the first eye 50. The first image frame is divided into two FOVs, which is a peripheral FOV and a central FOV. The central FOV of the image frame will be provided with higher number of light signals in per degree of FOV (higher light signal/pixel density projected on the retina) relative to the peripheral FOV. For example, the central FOV in both coordinate components may be set as 10 degrees of the total FOV in both coordinate components; the peripheral FOV on both sides may be set to be 15 degrees of the total FOV. When the viewer choose a higher VA setting, the spot size of the light signals in the central FOV may be decreased; meanwhile, the swing rate of the light direction modifier may be decreased in response to compensate for the increasing separation between each of the light signals. The light signals within the peripheral FOV can be produced with the default spot size with default swing frequency of the light direction modifier. As a result, the viewer can perceive a higher VA in the central FOV than the peripheral FOV in an image frame F1 with inconsistent pixel density. With reference to FIG. 8, the following demonstrates one specific example for varying the pixel density in one coordinate component (e.g., horizontal direction or vertical direction). In this example, the total FOV in one direction may be 40 degrees; the central FOV may be set to be 10 degrees, and the default resolution to be displayed per frame is 1280×720. If the target VA is 2.0, then the total number of pixels required in the central FOV is:

$$60 \times 2 \times 10 = 1200 \text{ pixels}$$

(where 60 is the number of pixels per degree of FOV required for VA=1.0) For the rest of the FOV (peripheral FOV), the pixel density remains the same. The total number of pixels in the direction in the peripheral FOV is:

$$1280 \times 30 / 40 = 960 \text{ pixels}$$

$$VA = 960 / 30 / 60 = 0.53$$

During the formation of the first image frame, the first light direction modifier 100 continuously rotates and changes the projection direction of the first light emitter 10 to produce the first image frame in a row-by-row or column-by-column manner. Particularly, the first light emitter 10 produces the first image frame by projecting one pixel of the image at a time; the first light direction modifier 100 then alters the direction of the first-eye light signals to produce another pixel of the image at a new location. The new location is oftentimes horizontally or vertically right next to the previous image pixel. Therefore, after a period of time, the first light emitter 10 produces a row of image pixels or a column of image pixels (e.g., 1280×1 or 1×720). The first light direction modifier 100 then changes the direction of the first-eye light signals to the next row or next column and continues to produce a second row or a second column of image pixels. This process is repeated until a complete image frame is produced (e.g., a complete image of 1280×720 pixels).

In some embodiments, with a constant projection frequency of the light emitter, the swing frequency of the light direction modifier can be decreased to increase pixel density in the sub scanning direction of the light direction modifier (by reducing the spatial separation between the adjacent pixels). For increasing the pixel density in the main scanning direction, the light projection frequency of the light emitter can be increased. For example, the swing frequency of the light direction modifier can be decreased by half to increase the number of pixels in the sub scanning direction from 720p to 1440p. The projection frequency of the light emitter can be increased by two times to increase the number of pixels in the main scanning direction from 720p to 1440p.

In other instances, it may be beneficial to implement two one-dimensional light direction modifiers since the swing frequency of the light direction modifier in both horizontal direction and vertical direction can be varied according to different regions of FOV. As mentioned earlier, the swing frequency of the light direction modifier in the horizontal direction and vertical direction are varied in accordance with the horizontal and vertical positions. While projecting image in the central FOV, the projection rate can be increased and/or the swing frequency of the light direction modifier in both the horizontal and vertical directions can be decreased such that a higher density of pixels or image pixels can be projected in the central FOV (which in turn increases VA in the central FOV). The projection rate and/or the swing frequency of the light direction modifier in both directions can resume to normal in the peripheral FOV.

In a variation of the aforementioned embodiment, the image in the central FOV may be produced with higher VA, while the light emitter does not emit any light signal associated with the peripheral FOV. Particularly, in an AR head wearable display system, only a portion of the target object (e.g., a target in a farther distance) may be selected by the viewer to display with higher VA; the other portion of the target object may be viewed by the viewer with natural vision. Therefore, only a small portion of the total FOV needs to be displayed with higher number of light signals per degree of FOV, and the remaining FOV are displayed with 0 light signals per degree of FOV. The frame rate may be maintained at a relatively higher level since a smaller FOV needs to be scanned by the light direction modifier.

As mentioned earlier, in order to achieve VA exceeding normal human vision, the number of distinguishable light signals per unit FOV projected on the viewer's retina needs to be increased. In order to achieve this, the following factors are considered by the present invention: the spot size of the light signals projected on the retina of the viewer; the size of the FOV perceived by the viewer, and the spatial separation between each of the light signals. In one embodiment of the present invention, the spot size relates to the size of the pixels projected on the retina. If the spot size is too large, or the spatial separations between the adjacent pixels (i.e., the spatial separation between the centers of the adjacent pixels) are too small, the pixels may overlap with each other and can cause pixels or images to be undistinguishable. On the other hand, if the spot size is too small, or the separation between the pixels is too large, the total number of pixels that can be packed in a viewing angle within an unit angle (or an area of the retina) is decreased. In both cases, the VA is degraded. As examples, the following table illustrates the relationship between VA and the key factors mentioned above. A laser projector is used as a light emitter in this example. The resolution of the laser projector in the present invention is typically 1280×720 or 1920×1080 pixels. However, the resolution of the light emitter is not limited to these values. The data shown in the table below are based on experimental results.

Table 1

## VA (or Angular Resolution) v.s. FOV and Spot size

| Resolution of Laser Projector | Visual Acuity | Pixels or lines/degree required | FOV to meet lines/degree (VA) requirement | Lens pair to shrink FOV | Minimum spot size to meet Rayleigh Criterion Unit: um (Ideal ~ Max.) |
|---|---|---|---|---|---|
| 1280 x 720p | 0.53 (1280/2400) | 0.53*60= 31.8 | 1280/31.8=40 degrees | F50 /F50 mm | 13.96~20.94 um |
| 1280 x 720p | 1 | 60 | 21.33 | F50 /F100 mm | 6.98~10.47 um |
| 1280 x 720p | 1.5 | 90 | 14.22 | F25 /F100 mm | 4.65~6.98 um |
| 1280 x 720p | 2 | 120 | 10.67 | F25 /F100mm | 3.49~5.25 um |
| 1280 x 720p | 2.5 | 150 | 8.53 | F20 /F100mm | 2.79~4.19 um |
| 1280 x 720p | 3 | 180 | 7.11 | F16.67 /F100mm | 2.33~3.49 um |
| 1280 x 720p | 4 | 240 | 5.33 | F12.5 /F100mm | 1.75~2.62 um |
| 1920 x 1080p | 2 | 120 | 16.00 | NA | 3.49~5.25 um |
| 1920 x 1080p | 4 | 240 | 8.00 | NA | 1.75~2.62 um |

According to the table above, in order to achieve VA of 1.0, the required number of distinguishable pixels (fulfilling Rayleigh Criterion) within one degree of FOV is 60. In the case of a laser projector capable of producing resolution of 1280×720p is used, to create VA of 2.0, the number of distinguishable pixels is needed within FOV of 10.67 degrees is 120. For VA of 3.0, 180 pixels are need within FOV of 7.1 degrees. For VA of 4.0, 240 distinguishable pixels are needed within FOV of 5.33 degrees. If a laser projector capable of producing resolution of 1920×1080p is used, to create VA of 2.0, 120 distinguishable pixels are needed within FOV of 16 degrees. For VA of 4.0, 240 distinguishable pixels are needed within FOV of 8 degrees.

Furthermore, in order to achieve VA exceeding normal vision, the appropriate radius of curvature (thereby, the focal length) of the combiner needs to be selected to suite different users. Once it is selected, for the viewers to be able to experience the desired VA setting, the distance between the light direction modifier and the collimator can be adjusted so as to project light signals with the proper spot size.

The following describe an exemplary implementation of the present invention. A head wearable display system may be used as a vision aid by a viewer to obtain vision capability higher than normal human vision (e.g., higher than VA 1.0). The target object detection module 800 captures a plurality of image pixels of the target object. The image pixels may be related to a portion of the target object or the entire target object, depending on the physical size of the target object. Since each portion of the target object may have variable positions and depths relative to the viewer, the target object detection module 800 determines a distance or a relative depth of at least a portion of the target object. For better understanding the present application, suppose there are two objects having the same physical size in a surrounding environment of the viewer, when both viewed by the viewer, the one farther (larger depth) to the viewer occupies a smaller portion of the total FOV relative to the one closer (smaller depth) to the viewer. For the viewer to see the object farther to the viewer with the same amount of details as the object closer to the viewer, the object farther to the viewer needs to be displayed with higher VA (e.g., exceeding VA 1.0). Consequently, as discussed earlier, for presenting the virtual image of different portions of the target object having different depths, the dispersion angle of each of the plurality of light signals and a spatial separation between centers of any two adjacent light signals presenting the images of the object need to be modified according to the depth variation. Furthermore, the target object mentioned herein may refer to the surrounding environment of the viewer or individual objects in the surrounding environment. If the target object occupies a relatively large portion of the total FOV of the viewer, the virtual image of the target object may be divided into a plurality of FOVs. Depending on the depths of different portions of the target object, ratio of a number of the plurality of first-eye light signals and a first FOV containing the first portion of the target object (i.e., number of first-eye light signals per degree) may exceed ratio of a number of the plurality of first-eye light signals and a second FOV containing the second portion of the target object. In this embodiment, the first FOV and the second FOV may respectively represent different portions of the target object.

In variation of the previously mentioned embodiment, when the target object is moving relative to the viewer, the target object detection module 800 captures the image pixels of the moving target object. The distance detection unit 801 of the target object detection module 800 dynamically determines a distance or a depth of the moving target object in the surrounding. The FOV of the virtual image of the moving target object varies according to the position of the moving target object. The dispersion angle of each of the plurality of light signals and a spatial separation between centers of any two adjacent light signals presenting the images of the moving target object need to be modified according to the depth of the object to compensate for the change of FOV. As a result, ratio of a number of the plurality of first-eye light signals and a first FOV of the target object (e.g., when the target object is farther away) may exceed ratio of a number of the plurality of first-eye light signals and a second FOV of the target object (e.g., when the target object is closer). In this embodiment, the first FOV and the second FOV may respectively represent different virtual images at different times of the moving target object.

Another aspect of the present invention is the ability to produce images of a portion of the target object or a target object having high VA and depth perception.

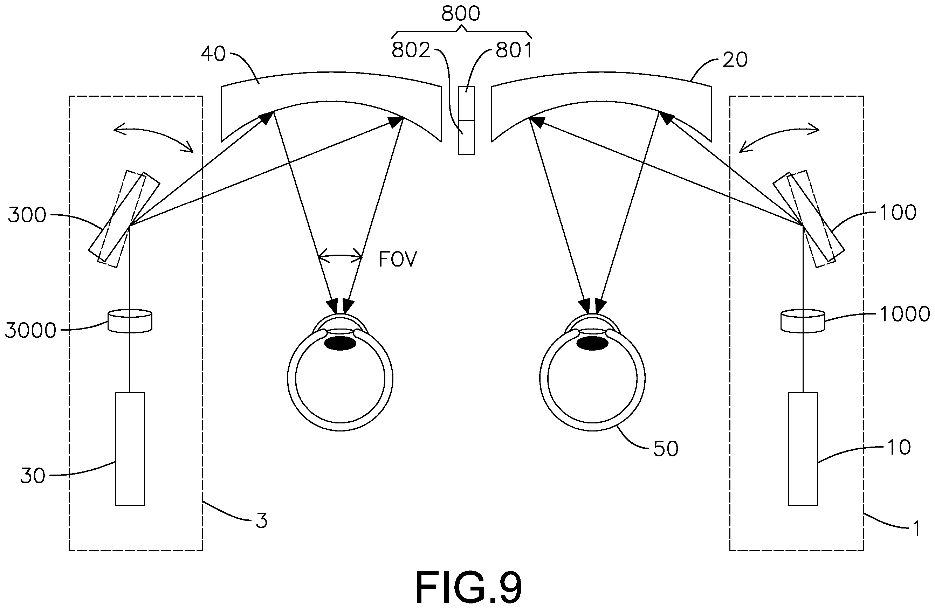

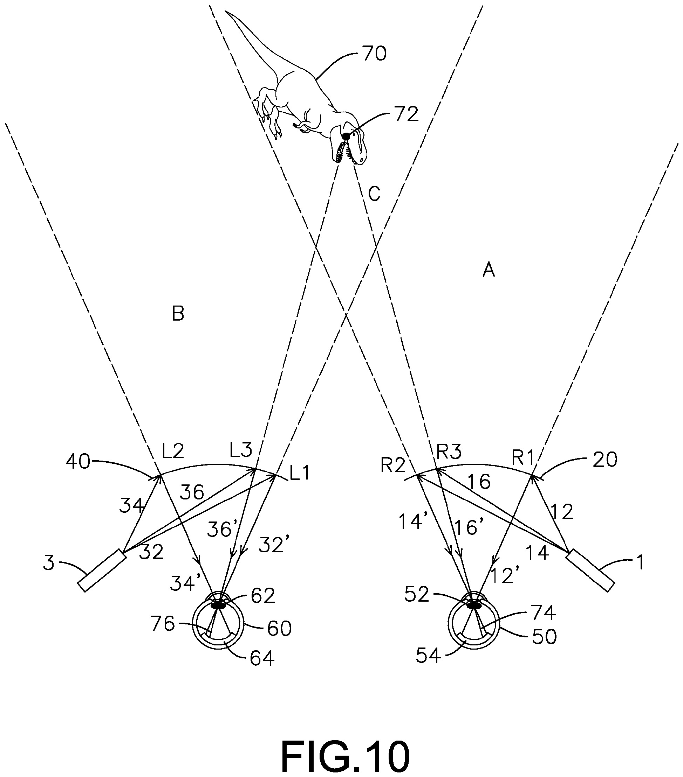

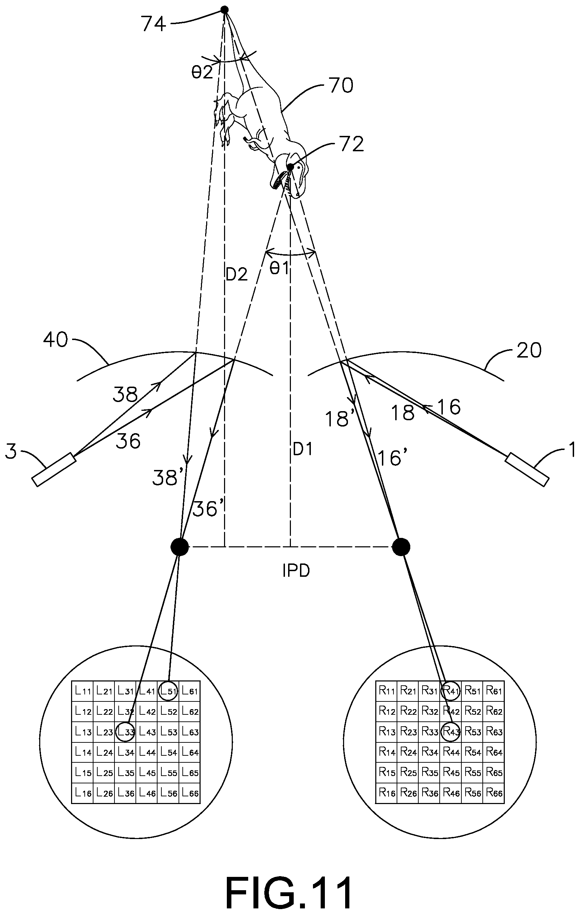

With reference to FIG. 9, in some embodiments, the present invention comprises a first light projector 1, which comprises a first light emitter 10, a first light direction modifier 100, a first collimator 1000, and a first combiner 20. In addition, the present invention further comprises a second light projector 3, which comprises: a second light emitter 30 emitting a plurality of second-eye light signals corresponding to the plurality of first-eye light signals to display the second-eye virtual image of the target object; a second collimator 3000 for adjusting a beam waist location of each of the plurality of second-eye light signals so that the plurality of second-eye light signals are separable from each other; a second light direction modifier 300 varying a light direction of each of the plurality of second-eye light signals emitted from the second light emitter 30. The present invention further comprises a second combiner 40, for redirecting and converging the plurality of second-eye light signals towards the second eye 60 of the viewer. The second light emitter 30, the second collimator 3000, the second light direction modifier 300, and the second combiner 40 are similar in functions as their counterparts. As an example, the plurality of second-eye light signals are perceived by the left eye of the viewer and the plurality of first-eye light signals are perceived by the right eye of the viewer (or vice versa). Each of the plurality of second-eye light signals has a corresponding first-eye light signal; namely, a first-eye light signal and the corresponding second-eye light signal fused together to create a virtual binocular pixel of the binocular virtual image. Each of the first-eye light signals and each of the second-eye light signals has a respective incident angle entering the first eye 50 and the second eye 60. Furthermore, the second light emitter 30, the second collimator 3000, the second light direction modifier 300, and the second combiner 40 may change the spot size by changing the location of the beam waist of the plurality of second-eye light signals and the spatial separation between adjacent second-eye light signals similar to their counterparts. The first eye 50 and second eye 60 perceive a first-eye light signal and the corresponding second-eye light signal to produce binocular vision, in which the first-eye light signal and the corresponding second-eye light signal fuse together to form a binocular pixel for the viewer. Particularly in the present embodiment, with reference to FIGs. 10 and 11, the first-eye light signal emitted by the first light projector 1 and redirected from the first combiner 20 enters a first eye 50 of the viewer. A corresponding second-eye light signal emitted by the second light projector 3 and redirected from the second combiner 40 enters a second eye 60 of the viewer. The first-eye light signals and second-eye light signals are perceived by the viewer to form a first virtual binocular pixel 72 of a virtual object 70 with a first depth (D1) that is related to a first angle (θ1) between the optical path extensions of the redirected first-eye light signal and the redirected second-eye light signal. More specifically, the light path extensions of the first-eye light signal and the second-eye light signal would be on the other side of the first combiner 20 and the second combiner 40, and virtually converges at a position P1. When the first angle θ1 between the two optical path extensions of the first-eye light signal and the second-eye light signal increases, the first depth d1 perceived by the viewer decreases; on the other hand, when the first angle θ1 decreases, the first depth d1 perceived by the viewer increases. The first depth d1 of the first virtual binocular pixel 72 can be calculated approximately by the following formula:

$$\tan\left(\frac{\theta1}{2}\right) = \frac{Interpupillary\ distance}{2d1}$$

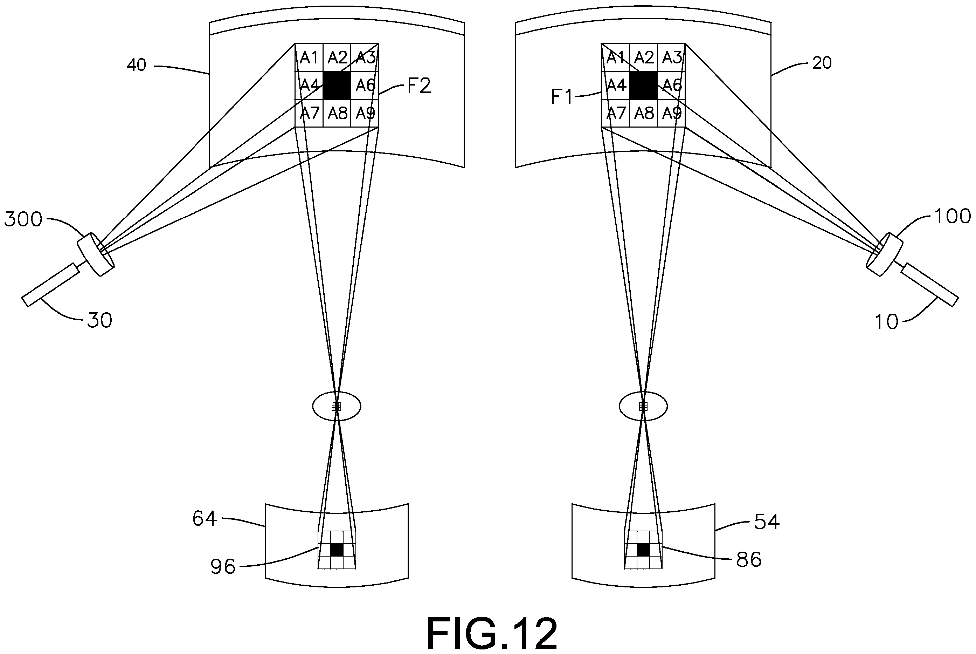

With reference to FIGs. 9-12 , while applying the above method for forming an image frame, the pixel in the first image frame F1 and a corresponding pixel in the second image frame F2 form a virtual binocular pixel at a first depth which is related to a first angle between the first-eye light signal and the second-eye light signal projecting into the viewer's eyes. Upon receiving of the plurality of light signals, the viewer would perceive a plurality of right pixels of the object in the first image frame F1 in the area A bounded by the extensions of the redirected second-eye light signals from the combiner. The area A is referred to as the FOV for the second eye 60. Likewise, the plurality of first-eye light signals in the second image frame F2 are redirected by the first combiner 20, pass the center of the left pupil 62, and are eventually received by the left retina 64. Upon receiving of the redirected first-eye light signals, the viewer would perceive a plurality of left pixels of the object in the area B bounded by the extensions of the redirected first-eye light signals. The area B is referred to as the FOV for the first eye 50. When both plurality of right pixels from the first image frame F1 and left pixels from the second image frame F2 are displayed in the area C which is an overlapped portion of area A and area B, at least one second-eye light signal displaying one right pixel and one first-eye light signal displaying one left pixel are fused to display a virtual binocular pixel with a specific depth in the area C. The depth is related to an angle between the redirected second-eye light signal and the redirected first-eye light signal. Such angle is also referred to as a convergence angle.

With further reference to FIGs. 9-12 , as described above, the plurality of second-eye light signals are generated by the second light projector 3, redirected by the second combiner 40, and then directly scanned by the right retina to form a right retina image on the right retina. Likewise, the plurality of first-eye light signals are generated by first light projector 1, redirected by the first combiner 20, and then scanned by the left retina to form a left retina image on the left retina. In an embodiment, a right retina image contains 36 right pixels from the first image frame F1 in a 6×6 array and a left retina image also contains 36 left pixels from the second image frame F2 in a 6×6 array (FIG. 11). In another embodiment, a right retina image contains 921,600 right pixels from the first image frame F1 in a 1280×720 array and a left retina image also contains 921,600 left pixels from the second image frame F2 in a 1280×720 array. The object displaying system is configured to generate a plurality of second-eye light signals and corresponding plurality of first-eye light signals which respectively form the right retina image on the right retina and the left retina image on the left retina. As a result, the viewer perceives a virtual binocular object with specific depths in the area C because of image fusion. The second-eye light signal 16 from the second light projector 3 is received and reflected by the second combiner 40. The redirected second-eye light signal 16 ', through the right pupil 52, arrives the right retina of the viewer to form the right pixel R34. The corresponding first-eye light signal 36 from the first light projector 1 is received and reflected by the first combiner 20. The first redirected light signal 36 ', through the left pupil 62, arrives the left retina of the viewer to form the left pixel L33. As a result of image fusion, a viewer perceives the virtual binocular object with a plurality of depths where the depths are determined by the angles of the plurality of redirected second-eye light signals and the corresponding plurality of redirected first-eye light signals for the same object. The angle between a redirected second-eye light signal and a corresponding redirected first-eye light signal is determined by the horizontal distance between the right pixel and the left pixel. In other words, the deeper a virtual binocular pixel is perceived by the viewer, the smaller relative horizontal distance at X axis between the right pixel and left pixel forming such a virtual binocular pixel is. For example, the second virtual binocular pixel 74 is perceived by the viewer to have a larger depth (i.e., farther away from the viewer) than the first virtual binocular pixel 72. Thus, the horizontal distance between the second right pixel and the second left pixel is smaller than the horizontal distance between the first right pixel and the first left pixel on the retina images.

In a variation of the above embodiments, the head wearable display system in accordance with the present invention may have a single combiner covering both eyes of the viewer. The radius of curvature of the combiner is designed to respectively receive and converge the plurality of first-eye light signals and the plurality of second-eye light signals. Each of the plurality of second-eye light signals has a dispersion angle when traveling from the first combiner 20 to the viewer's second eye 60.

With the method mentioned above, in an AR environment, a virtual image of a portion of the target object (e.g., an object within the target object) consisted of a plurality of first and second-eye light signals can be presented with a plurality of depths so the viewer can see the virtual image with best realism (with depth perception and 3D effect). Furthermore, based upon the plurality of depths of different points of the portion of the surrounding, the virtual image can be superimposed onto the real image of the portion of the surrounding as supplement so the viewer can see the portion of the surrounding with higher VA. In this embodiment, the image information captured by the target object detection module 800 unit may be superimposed onto the image seen by the viewer. More specifically, in some instances, the depth or position of a virtual image (such as an object within the target object) can be set to match the depth or position of an interactive object (such as the surrounding environment), making the virtual image appear as if it is on or near the interactive object. If desired, the virtual image can also be superimposed onto the interactive object. In another embodiment, the present invention is implemented as a VR system, the vision of the viewer may completely rely on the image information provided by the VR system.

With the embodiments above, the eye tracking device 802 may respectively determine the location of fixation of the viewer's first eye 50 and second eye. The eye tracking device 802 is configured to at least track locations of a viewer's both pupils. In addition, the eye tracking module may be configured to provide more information about the viewer's eyes, including but not limited to, eye movement, pupil size, gaze angle (view angle), and convergence angle of the viewer's each eye. Such eye information may be used to determine not only the directions and locations to project light signals for virtual objects but also the viewer's fixation locations and fixation depths. The eye tracking device may comprise a first camera to track the first eye 50 and a second camera to track the second eye 60. In addition to traditional eye tracking cameras, the first camera and the second camera may be built by the technologies of ultra-compact MEMS. The first camera and the second camera may use infrared light emitters and sensors to detect and derive various eye information. The eye tracking device 802 may further comprise an integrated inertial measurement unit (IMU), which is an electronic device that measures and reports a body's specific force, angular rate, and sometimes the orientation of the body, using a combination of accelerometers, gyroscopes, and sometimes magnetometers. The following describe an exemplary implementation of the present invention in which the first eye and the second eye of the viewer are both provided with a light emitter, a collimator, a light direction modifier and a combiner to obtain vision capability higher than normal human vision (e.g., higher than VA 1.0). The eye tracking device 802 determines the location of fixation of the viewer to determine the portion of target object where the viewer is viewing. The target object detection module 800 captures a plurality of image pixels of the target object. The plurality of image pixels may be related to a portion of the target object or the entire target object. Since each portion of the target object may have variable positions and depths relative to the viewer, the target object detection module 800 needs to determine a distance or a corresponding depth of at least a portion of the target object at which the viewer is fixated on. As discussed earlier, for presenting the virtual image of different portions of the target object having different depths, the dispersion angle of each of the plurality of light signals and a spatial separation between centers of any two adjacent light signals presenting the images of the object need to be modified according to the depth variation. Furthermore, the target object mentioned herein may refer to the surrounding environment of the viewer or an individual object in the surrounding environment. If the target object or a portion of the target object occupies a relatively large portion of the total FOV of the viewer, the virtual image of the target object may be divided into a plurality of FOVs. Depending on the location of fixation on the target object, ratio of a number of the plurality of first-eye light signals and a first FOV containing the first portion of the target object (i.e., number of first-eye light signals per degree) may exceed ratio of a number of the plurality of first-eye light signals and a second FOV containing the second portion of the target object; meanwhile, ratio of a number of the plurality of second-eye light signals and a third FOV containing the first portion of the target object (i.e., number of second-eye light signals per degree) may exceed ratio of a number of the plurality of second-eye light signals and a fourth FOV containing the second portion of the target object. The first FOV of the first eye corresponds to the third FOV of the second eye, both present the first portion of the target object. The second FOV of the first eye corresponds to the fourth FOV of the second eye, both present the second portion of the target object. In this embodiment, the spot size and the spatial separation of the plurality of first-eye light signals and second-eye light signals are dynamically modified according to the location of fixation of the viewer.

The dispersion angle of each of the plurality of light signals and a spatial separation between centers of any two adjacent light signals presenting the images of the target object mentioned above may be modified according to the aforementioned method; namely, by modifying the projection duration of the light emitter, the distance between the combiner and the collimator, the projection frequency of the light emitter, and the swing frequency of the light direction modifier. In practice, both eyes of the viewer can constantly change the location of fixation for viewing different objects or different portions of the target object having different 3-dimensional positions (which includes depths). Or in some cases, both eyes of the viewer may be fixated on a moving object so the viewer needs to constantly change the location of fixation. Therefore, the projection duration of the light emitter, the distance between the combiner and the collimator, the projection frequency of the light emitter, and the swing frequency of the light direction modifier may need to be modified according to the location of fixation dynamically (thereby, the depth of the object being fixated by the viewer).

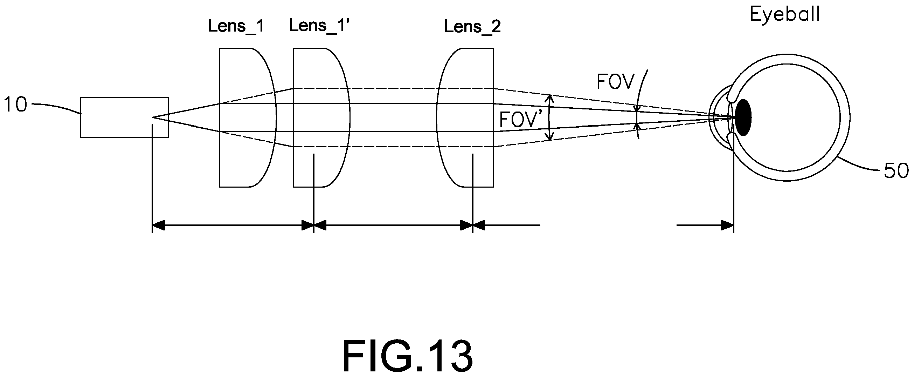

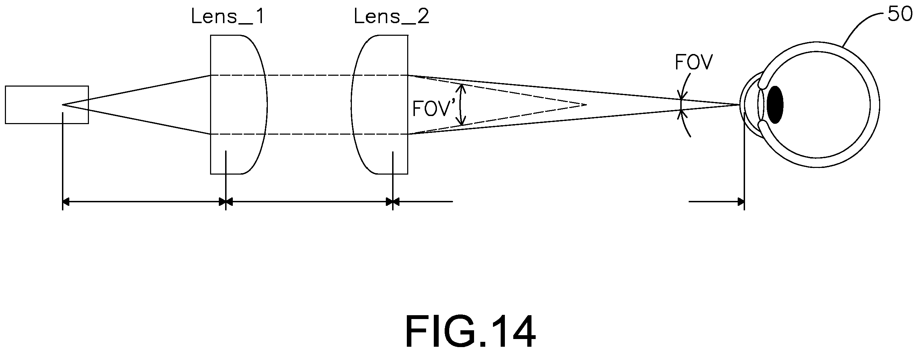

With reference to FIGs. 13-14, further in another variation of the present embodiment, an optical assembly may be disposed between the light emitter and the collimator mentioned above to alter predetermined cross sectional areas of optical paths of the plurality of light signals. Specifically, the optical assembly contains lens that may be implemented for altering optical paths of the plurality of first-eye light signals from the first light emitter 10 to the first combiner 20 to change a projection area or a cross sectional size (i.e., spot size) of each of the plurality of first-eye light signals. For example, with reference to FIG. 13, the optical assembly comprises Lens_1 and Lens_2. Lens_1 and Lens_2 are convex lenses. A light emitter is originally placed at the focal length of Lens_1. When Lens_1 is moved to a new position shown as Lens_1', the distance between the light emitter and Lens_1 is increased; as a result, the amount of light dispersion angle from the LBS is increased. Thereby, the projection area or a cross sectional size of each of the plurality of first-eye light signals is also increased, which causes the spot size of the light signal to increase. In another embodiment, with reference to FIG. 14, the optical assembly comprises Lens_1, Lens_2, and the LBS. Lens_1 and Lens_2 are convex lenses. The light emitter is placed at the focal length of Lens_1 so the light signals emitted by the light emitter become substantially collimated light signals after passing Lens_1. In this mode, the focal length of Lens_2 can be selected to decrease the FOV. For example, changing the focal length of Lens _2 from 50mm to 100mm (and placing the pupil 100mm away from Lens_2, which is at the focus of Lens_2 ) can decrease a half of the FOV. When the present invention is realized in the form of head wearable devices or AR/VR glasses, Lens_2 can be implemented as the combiner. However, Lens_2 can also be implemented as other optical elements in other embodiments.

In some embodiments, to further improve FOV, the method shown in FIG. 13 and FIG. 14 can be implemented simultaneously. When the present invention is realized in the form of head wearable devices or AR/VR glasses, Lens_2 can be implemented as the combiner. However, Lens_2 can also be implemented as other optical elements in other embodiments.

The present invention may assist viewers with cornea and retina impairment (for example, age-related macular degeneration). For people having normal eye condition, the best area for sensing lights is the macular portion; but for people with macular degeneration or other eye diseases, other areas of the eye may be preferred for sensing lights and receiving image pixels. Therefore, the present invention can be used to project light signals to the healthy region of the retina to produce image of the surrounding environment for the viewer to see. Before implementing the present invention, corneal topography and retina perimeter may be used to find the best optical path and location for light signals to be projected to the viewer's eyes. Meanwhile, it is needed to identify the best incidence angle for entering an area of the cornea having the least defect for projecting lights on a portion of the retina having the least defect. In order to achieve this function, the combiner may be designed to have an oval-shaped concave surface, and/or with a customized reflective angle.

In the present invention, the combiners 20, 40 receives, converges, and redirects a plurality of light signals generated by the light emitters 10, 30. In one embodiment, the combiners 20, 40 reflect the plurality of light signals so that the redirected light signals are on the same side of the combiners 20, 40 as the incident light signals. In another embodiment, the combiners 20, 40 refract the plurality of light signals so that the redirected light signals are on the different side of the combiners 20, 40 from the incident light signals. When the combiners 20, 40 also function as refractors, the reflection ratio of the combiner can vary widely, such as 20%-80%, in part depending on the power of the light signal generator. People with ordinary skill in the art know how to determine the appropriate reflection ratio based on characteristics of the light emitters 10, 30 and the combiners 20, 40. Besides, in one embodiment, the combiners 20, 40 are optically transparent to the ambient (environmental) lights from the opposite side of the incident light signals. The degree of transparency can vary widely depending on the application. For AR/MR application, the transparency is preferred to be more than 50%, such as about 75% in one embodiment. In addition to redirecting the light signals, the combiners 20, 40 may converge the plurality of light signals forming the combiner images so that they can pass through the pupils and arrive the retinas of the viewer's both eyes. The combiners 20, 40 may be made of glasses or plastic materials like lens, coated with certain materials such as metals to make it partially transparent and partially reflective. One advantage of using a reflective combiner instead of a wave guide in the prior art for directing light signals to the viewer's eyes is to eliminate the problem of undesirable diffraction effects, such as multiple shadows, color displacement . . . etc. The combiners 20, 40 may be holographic combiners but not preferred because the diffraction effects can cause multiple shadows and RGB displacement. In some embodiments, we may want to avoid using holographic combiners; or in other embodiment, the present invention may utilize a shutter to significantly reduce environmental lights from entering the viewer's eyes. The shutter may be activated by reducing transparency of the first combiner and the second combiner.

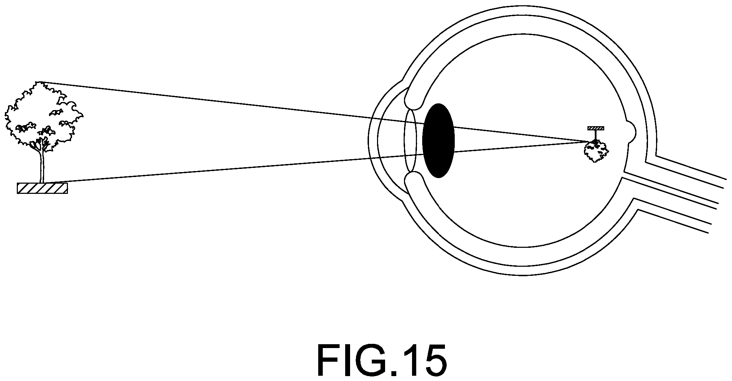

In some embodiments, the present invention can be implemented as a head wearable device for vision correction or vision training. The present invention can be used for correcting or improving eye disorders such as, but not limited to, myopia, hyperopia, strabismus, amblyopia, and convergence disorders. The principle of correcting or improving the aforementioned diseases is targeting the eye of the viewer with more visual stimuli. In other words, giving eyes with proper stimulus can promote VA and muscle movement improvement of the eyes. With reference to FIG. 15, as an example, the present invention can be used to correct the vision of people having myopia or hyperopia. In this embodiment, the head wearable device with AR/VR system is able to capture real time image of a target object or the surrounding environment to be viewed by a viewer via the target object detection module 800 and project a pixelized image having depth perception to the viewer. The pixelized image of the system can be focused at a desirable location by the methods mention earlier. For example, the pixelized image can be focused right in front of the retina for people with myopia; or focused right behind the retina for people with hyperopia, so as to stimulate the ciliary muscle to adjust the lens of the eye for correctly focusing the image on the retina. By using this method, the muscles of the eyes can be trained.

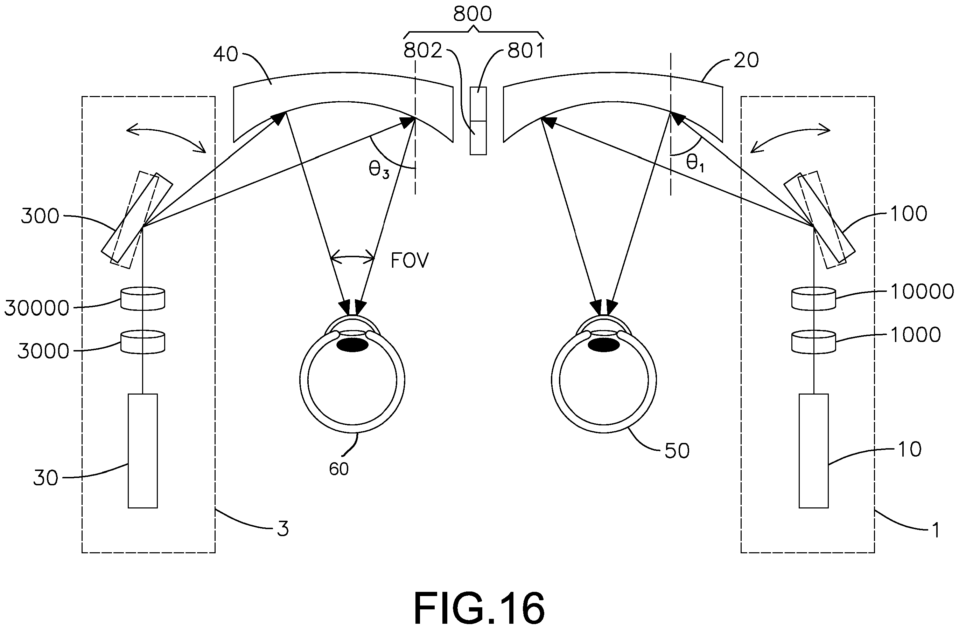

With reference to FIG. 16, which illustrates yet another embodiment of the head wearable display system of the present invention. More specifically, other than the head wearable display system shown in FIG. 9, the head wearable display system illustrated in FIG. 16 further includes a focusing element. Please note that although the head wearable display system illustrated in FIG. 16 is a binocular head wearable display system targeting the first eye 50 and the second eye 60 of the viewer, in some embodiments, the head wearable display system illustrated in FIG. 16 may also be a single-eyed head wearable display system targeting solely the first eye 50 or the second eye 60 of the viewer.

For the first eye 50 of the viewer, the head wearable display system may include the first light emitter 10, the first collimator 1000, a first focusing element 10000, the first light direction modifier 100, the first combiner 20, and the target object detection module 800. Since the first light emitter 10, the first collimator 1000, the first light direction modifier 100, the first combinor 20, and the target object detection module 800 are substantially the same as previously described disclosure, further details will not be provided here. Taking FIG. 16 as an example, the first focusing element 10000 may be disposed between the first collimator 1000 and the first light direction modifier 100. The first focusing element 10000 may be used to adjust the beam waist size of each of the plurality of first-eye light signals, so as to adjust the spot sizes of the plurality of first-eye signals on the first eye 50 of the viewer. In some embodiments, the first focusing element 10000 may be an optical component known to those skilled in the art, such as a plano-convex lens in specific. Furthermore, in some embodiments, the spacing between the first focusing element 10000 and the first light emitter 10 may be ranged between 6.5 mm and 20.0 mm, which may be 12.0 mm in specific as an example. When the first focusing element 10000 is disposed closer to the first light emitter 10, the collimated plurality of first-eye light signals will be focused earlier, resulting in a smaller beam waist for each of the collimated and focused first-eye light signals emitted by the first light direction modifier 100, so that the spot sizes of the plurality of first-eye light signals on the first eye 50 of the viewer are correspondingly adjusted; conversely, when the first focusing element 10000 is disposed farther away from the first light emitter 10, the collimated plurality of first-eye light signals will be focused later, leading to a larger beam waist for each of the collimated and focused first-eye light signals emitted by the first light direction modifier 100, so that the spot sizes of the plurality of first-eye light signals on the first eye 50 of the viewer are correspondingly adjusted. In this way, the head wearable display system may optimize the VA of the first eye 50 of the viewer through the configuration of the first focusing element 10000.

In addition, taking FIG. 16 as an example, the first light projector 1 shown in FIG. 16 may sequentially include the first light emitter 10, the first collimator 1000, the first focusing element 10000, and the first light direction modifier 100, so as to emit to the first combiner 20 a plurality of first-eye light signals that are collimated, focused, and having their directions changed, thereby displaying a first-eye virtual image of a first portion and a second portion of the target object for the viewer. More specifically, taking FIG. 16 as an example, the first light emitter 10 may be used to emit a plurality of first-eye light signals to display the first-eye virtual image of the first portion and the second portion of the target object for the viewer; successively, the first collimator 1000 may adjust the beam waist position of each of the plurality of first-eye light signals emitted by the first light emitter 10, to make the plurality of first-eye light signals separate from each other; successively, the first focusing element 10000 may adjust the beam waist size of each of the plurality of collimated first-eye light signals, to adjust the spot sizes of the plurality of first-eye light signals on the first eye 50 of the viewer; successively, the first light direction modifier 100 may change the light direction of each of the plurality of collimated and focused first-eye light signals individually, so that the first light direction modifier 100 may be able to direct the plurality of first-eye light signals toward the first combiner 20 with a first-eye light incident angle $\theta_1$.

Additionally, for the second eye 60 of the viewer, the head wearable display system may include the second light emitter 30, the second collimator 3000, a second focusing element 30000, the second light direction modifier 300, a second combiner 40, and the target object detection module 800. Since the second light emitter 30, the second collimator 3000, the second light direction modifier 300, the second combinor 40, and the target object detection module 800 are substantially the same as previously described disclosure, further details will not be provided here. Taking FIG. 16 as an example, the second focusing element 30000 may be disposed between the second collimator 3000 and the second light direction modifier 300. The second focusing element 30000 may be used to adjust the beam waist size of each of the plurality of second-eye light signals, so as to adjusts the spot sizes of the plurality of second-eye light signals on the second eye 60 of the viewer. In some embodiments, the second focusing element 30000 may be an optical component known to those skilled in the art, such as a plano-convex lens in specific. Furthermore, in some embodiments, the spacing between the second focusing element 30000 and the second light emitter 30 may be ranged between 6.5 mm and 20.0 mm, which may be 12.0 mm in specific as an example. When the second focusing element 30000 is disposed closer to the second light emitter 30, the collimated plurality of second-eye light signals will be focused earlier, resulting in a smaller beam waist for each of the collimated and focused plurality of second-eye light signals emitted by the second light direction modifier 300, so that spot sizes of the plurality of second-eye light signals on the second eye 60 of the viewer are correspondingly adjusted; conversely, when the second focusing element 30000 is disposed farther away from the second light emitter 30, the collimated plurality of second-eye light signals will be focused later, leading to a larger beam waist for each of the plurality of collimated and focused second-eye light signals emitted by the second light direction modifier 300, so that the spot sizes of the plurality of second-eye light signals on the second eye 60 of the viewer are correspondingly adjusted. In this way, the head wearable display system may optimize the VA of the second eye 60 of the viewer through the configuration of the second focusing element 30000.

In addition, taking FIG. 16 as an example, the second light projector 3 shown in FIG. 16 may sequentially include the second light emitter 30, the second collimator 3000, the second focusing element 30000, and the second light direction modifier 300, so as to emit to the second combiner 40 a plurality of second-eye light signals that are collimated, focused, and having their directions changed, thereby displaying a second-eye virtual image of a first portion and a second portion of the target object for the viewer. More specifically, taking FIG. 16 as an example, the second light emitter 30 may be used to emit a plurality of second-eye light signals to display the second-eye virtual image of the first portion and the second portion of the target object for the viewer; successively, the second collimator 3000 may adjust the beam waist position of each of the plurality of second-eye light signals emitted by the second light emitter 30, to make the plurality of second-eye light signals separate from each other; successively, the second focusing element 30000 may adjust the beam waist size of each of the plurality of collimated second-eye light signals, to adjust the spot sizes of the plurality of second-eye light signals on the second eye 60 of the viewer; successively, the second light direction modifier 300 may change the light direction of each of the plurality of collimated and focused second-eye light signals individually, so that the second light direction modifier 300 may be able to direct the plurality of second-eye light signals toward the second combiner 40 with a second-eye light incident angle $\theta_3$.

In some embodiments, the head wearable display system may be binocular head wearable display system, which specifically may comprise a target object detection module 800, a first light emitter 10, a first collimator 1000, a first focusing element 10000, a first light direction modifier 100, a first combiner 20, a second light emitter 30, a second collimator 3000, a second focusing element 30000, a second light direction modifier 300, and a second combiner 40, so as to optimize the VA of the first eye 50 and the second eye 60 of the viewer.

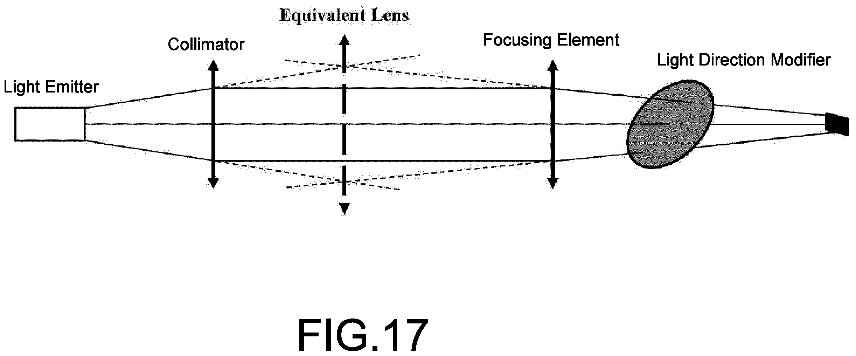

Please refer to FIG. 17, which explains the effect of the focusing element on the light signals. Specifically, FIG. 17 may be used to explain the effect of the first focusing element on the plurality of first-eye light signals emitted by the first light emitter, or it may be used to explain the effect of the second focusing element on the plurality of second-eye light signals emitted by the second light emitter.

Taking FIG. 17 as an example, when the focusing element (either the first focusing element or the second focusing element) is positioned closer to the light emitter (either the first light emitter or the second light emitter), this causes the plurality of collimated light signals (either the plurality of first-eye light signals or the plurality of second-eye light signals) to be focused earlier, as a result, the beam waist of each of the plurality of collimated and focused light signals emitted by the light direction modifier (either the first light direction modifier or the second light direction modifier) becomes smaller, thereby accordingly adjusting the spot sizes of the plurality of light signals on the viewer's eye (either the first eye or the second eye); conversely, when the focusing element is positioned farther away from the light emitter, this causes the plurality of collimated light signals to be focused later, resulting in a larger beam waist for each of the plurality of collimated and focused light signals emitted by the light direction modifier, thereby accordingly adjusting the spot sizes of the plurality of light signals on the viewer's eye. In this way, the head wearable display system can optimize the VA of the viewer's eye (either the first eye or the second eye) through the configuration of the focusing elements (either the first focusing element or the second focusing element).

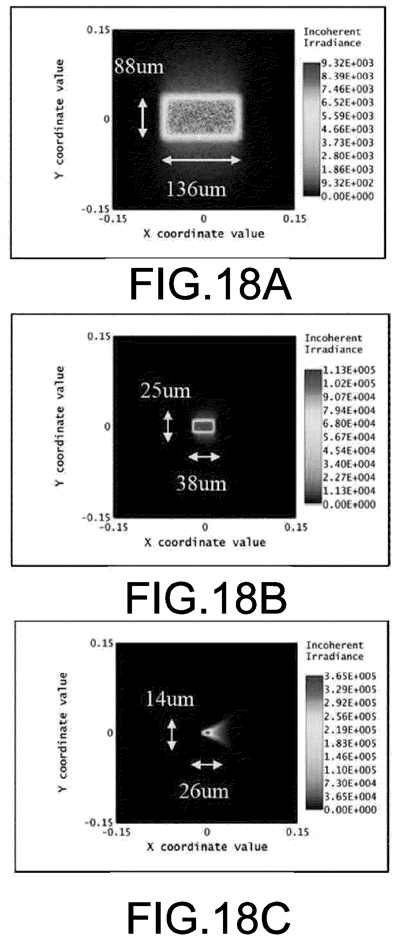

Please refer to FIGs. 18A-18C, which explain the effect of changing radius of curvatures of focusing elements on spot sizes. In some embodiments, the radius of curvature of the first focusing element 10000 shown in FIG. 16 can range from -5 mm to -50 mm. Additionally, in some embodiments, the radius of curvature of the second focusing element 30000 shown in FIG. 16 can also range from -5 mm to -50 mm. Due to the different radii of curvature of the focusing elements (either the first focusing element 10000 or the second focusing element 30000), the focal lengths of the focusing elements would also be different, which would result in different light spot sizes of the plurality of light signals on the retina of the viewer's eye (either the first eye or the second eye). Specifically, when the radius of curvature of the focusing element is larger, the focal length of the focusing element is longer, leading to larger light spot sizes of the plurality of light signals on the retina; conversely, when the radius of curvature of the focusing element is smaller, the focal length of the focusing element is shorter, resulting in smaller light spot sizes of the plurality of light signals on the retina.

Taking FIG. 18A as an example, when the radius of curvature of the focusing element (either the first focusing element 10000 or the second focusing element 30000) is -50 mm, the spot size on the retina of the viewer's eye (either the first eye or the second eye) is 136 $\mu$m $\times$ 88 $\mu$m. In addition, taking FIG. 18B as an example, when the radius of curvature of the focusing element is -13.4 mm, the spot size on the retina of the viewer's eye is 38 $\mu$m $\times$ 25 $\mu$m. Furthermore, taking FIG. 18C as an example, when the radius of curvature of the focusing element is -5 mm, the spot size on the retina of the viewer's eye is 26 $\mu$m $\times$ 14 $\mu$m. This demonstrates that the head wearable display system can further optimize the VA of the viewer's eye (either the first eye or the second eye) by the configuration of focusing elements with small radii of curvature (either the first focusing element or the second focusing element).

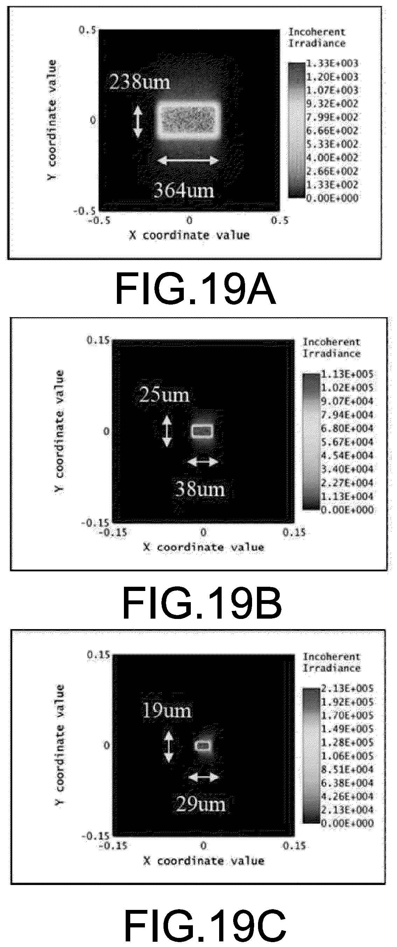

Please refer to FIGs. 19A-19C, which explain the effect of changing incident angles on spot sizes. In some embodiments, the plurality of first-eye light signals emitted by the first light direction modifier 100 shown in FIG. 16 can be directed toward the first combiner 20 with a first-eye light incident angle $\theta_1$, wherein the first-eye light incident angle $\theta_1$ can range from 15 degrees to 75 degrees. In addition, in some embodiments, the plurality of second-eye light signals emitted by the second light direction modifier 300 shown in FIG. 16 can be directed toward the second combiner 40 with a second-eye light incident angle $\theta_3$, wherein the second-eye light incident angle $\theta_3$ can range from 15 degrees to 75 degrees. Due to the different incident angles (either the first-eye light incident angle $\theta_1$ or the second-eye light incident angle $\theta_3$) of the plurality of light signals (either the plurality of first-eye light signals or the plurality of second-eye light signals) emitted by the light direction modifiers (either the first light direction modifier 100 or the second light direction modifier 300) toward the combiners (either the first combiner or the second combiner), the corresponding exit angles and focal lengths would also be different. This would result in different spot sizes of the plurality of light signals on the retina of the viewer's eye (either the first eye or the second eye). Specifically, when the light direction modifier directs the plurality of light signals toward the combiner with a larger incident angle, the corresponding exit angle is larger and the focal length is longer, leading to larger spot sizes of the plurality of light signals on the retina; conversely, when the light direction modifier directs the plurality of light signals toward the combiner with a smaller incident angle, the corresponding exit angle is smaller and the focal length is shorter, resulting in smaller spot sizes of the plurality of light signals on the retina.

Taking FIG. 19A as an example, when the light direction modifier (either the first light direction modifier 100 or the second light direction modifier 300) directs a plurality of light signals (either the plurality of first-eye light signals or the plurality of second-eye light signals) toward the combiner (either the first combiner or the second combiner) with an incident angle of 75 degrees, the spot size on the retina of the viewer's eye (either the first eye or the second eye) is 364 $\mu$m $\times$ 238 $\mu$m. In addition, taking FIG. 19B as an example, when the light direction modifier directs the plurality of light signals toward the combiner with an incident angle of 35.5 degrees, the spot size on the retina of the viewer's eye is 38 $\mu$m $\times$ 25 $\mu$m. Furthermore, taking FIG. 19C as an example, when the light direction modifier directs the plurality of light signals toward the combiner with an incident angle of 15 degrees, the spot size on the retina of the viewer's eye is 29 $\mu$m $\times$ 19 $\mu$m. This demonstrates that the head wearable display system can further optimize the VA of the viewer's eye (either the first eye or the second eye) by the configuration of smaller incident angles (either the first-eye light incident angle $\theta_1$ or the second-eye light incident angle $\theta_3$).

Furthermore, in some embodiments, the head wearable display system can further optimize the VA of the viewer's eye (either the first eye or the second eye) by utilizing the configuration of focusing elements (either the first focusing element or the second focusing element) with a small radius of curvature and small incident angles (either first-eye incident angle $\theta_1$ or second-eye incident angle $\theta_3$), so as to achieve optimized VA effects such as VA 1.0, VA 1.5, VA 2.0, VA 2.5, VA 3.0, or VA 4.0.

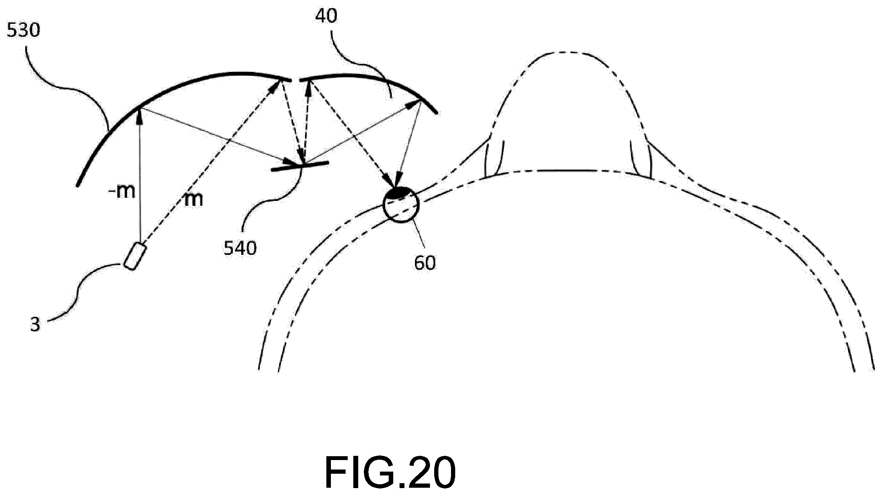

Please refer to FIG. 20, which illustrates the head wearable display system of an embodiment of the present invention. For simplicity, only one side of the head wearable display system is shown. However, it should be understood that the present invention can be applied to one eye (for example, the second eye 60) of the viewer or to both eyes of the viewer. In the present invention, the term "light redirector" refers to any optical element configured to change the traveling direction of light after the light encounters or is incident upon the optical element. For example, a light redirector can be any optical lens, mirror, reflector, refractor, elliptical lens/reflector, spherical lens/reflector, parabolic reflector, aspheric lens/reflector, freeform surface optical lens/reflector, or hypersurface reflector, etc. In the present invention, the term "substantially equal to" is used to discuss the optical path lengths of different light signals. It should be understood that when two optical path lengths are considered "substantially equal to," it means that the difference between the two optical path lengths is less than 5%. The term "close to" refers to an object (i.e., any part of the object) being positioned as near as possible to a certain location (or another object), but it may not be at that location due to measurement errors, manufacturing errors, allowable engineering tolerances, or any other types of physical limitations.

For the viewer's second eye 60, the head wearable display system includes a second light projector 3 (which may comprise the aforementioned second light emitter, second collimator, second focusing element, and second light direction modifier), a third light redirector 530, a fourth light redirector 540, a second combiner 40, and the previously mentioned target object detection module. Further description would be provided regarding the operation between the second light projector 3, the third light redirector 530, the fourth light redirector 540, and the second combiner 40. The second light projector 3 is used to emit a plurality of second-eye light signals. The second light projector 3 changes the projection direction between a first spatial dimension limit (for example, -m, where -m is the coordinate in the $\varphi$ direction or x direction in a polar coordinate system) and a second spatial dimension limit (for example, m, where m is the coordinate in the $\varphi$ direction or x direction in a polar coordinate system) in the first dimension (such as the x-coordinate dimension or y-coordinate dimension in a Cartesian coordinate system, or the $\theta$ coordinate dimension or $\varphi$ coordinate dimension in a polar coordinate system). The first dimension can be the x-coordinate dimension or y-coordinate dimension in a Cartesian coordinate system, or the $\theta$ coordinate dimension or $\varphi$ coordinate dimension in a polar coordinate system. The projection direction varies at least in one dimension. When the projection direction varies in two dimensions, an image frame can be formed. For example, the first spatial dimension limit and the second spatial dimension limit are -m and m, the second light projector 3 emits a plurality of light signals between -m and m. For example, in certain cases, when the projection direction varies in the x direction (for example, horizontally), the light signals emitted near the first spatial dimension limit would create a left edge of the image frame; while the light signals emitted near the second spatial dimension limit would create a right edge of the image frame. For example, the first spatial dimension limit and second spatial dimension limit can also refer to -n and n, the second light projector 3 emits a plurality of light signals between -n and n. For example, in some other cases, when the projection direction varies in the y direction (for example, vertically), the light signals emitted near the first spatial dimension limit would create an upper edge of the image frame; while the light signals emitted near the second spatial dimension limit would create a lower edge of the image frame.

The third light redirector 530 and the fourth light redirector 540 receive a plurality of first-eye light signals and change the individual directions of the plurality of second-eye light signals; in addition, the second combiner 40 may not only redirect and converge the plurality of second-eye light signals to the viewer's second eye 60 but may also receive the plurality of first-eye light signals and change the individual directions of the plurality of second-eye light signals. Each light signal of the plurality of second-eye light signals has a different optical path. The third light redirector 530 receives the plurality of second-eye light signals and directs the plurality of second-eye light signals to the fourth light redirector 540. The fourth light redirector 540 then directs the plurality of second-eye light signals received from the third light redirector 530 to the second combiner 40. The second combiner 40 directs the plurality of second-eye light signals received from the fourth light redirector 540 to the viewer's eye (second eye 60), allowing the viewer to see an image frame composed of the plurality of second-eye light signals (pixels). The third light redirector 530 and the second combiner 40 may respectively have at least one focus. In other embodiments, the third light redirector 530 or the second combiner 40 may have two or more focuses.

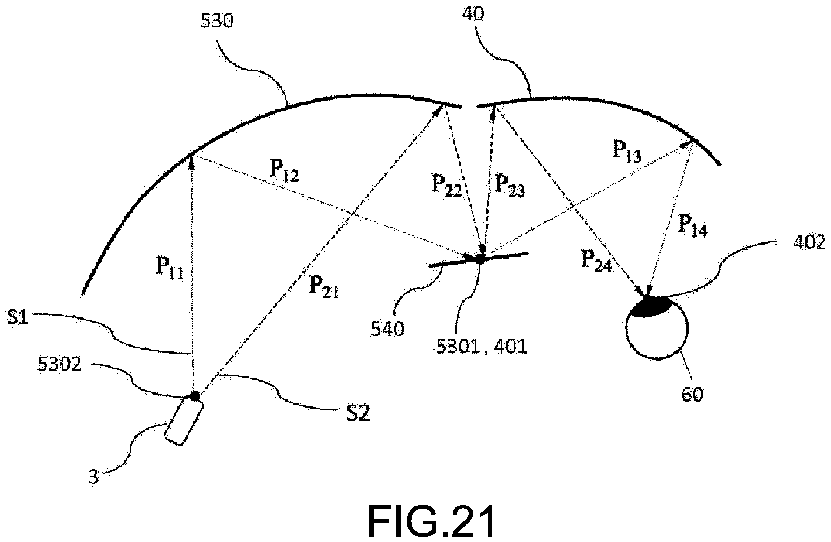

Please refer to FIG. 21, which illustrates an embodiment of the present invention. In one embodiment of the invention, the fourth light redirector 540 is positioned adjacent to (or close to) the first focus 5301 of the third light redirector and the first focus 401 of the second combiner (for example, the first focus 5301 of the third light redirector and the first focus 401 of the second combiner are at the same spatial location). The third light redirector 530 receives a plurality of second-eye light signals emitted by the second light projector 3 and directs all the second-eye light signals toward the first focus 5301 of the third light redirector, where the plurality of second-eye light signals with different optical path lengths are focused at the first focus. The actual size of the fourth light redirector 540 can be much smaller relative to the third light redirector 530, as it is located at the focus of the third light redirector 530 and requires a small amount of surface area to receive the plurality of second-eye light signals from the second light direction modifier in the second light projector 3. This is particularly advantageous for the design of the head wearable display system, as it can significantly reduce the overall size of the head wearable display system. Additionally, by placing the fourth light redirector 540 adjacent to (or close to) the first focus 5301 of the third light redirector, all light signals from the second light direction modifier in the second light projector 3 can be received by the fourth light redirector 540. In this embodiment, the fourth light redirector 540 is also positioned adjacent to (or close to) the first focus 401 of the second combiner, allowing the second combiner 40 to receive all second-eye light signals from the fourth light redirector 540.

In some cases (referring to FIG. 21), the third light redirector 530 may comprise a second focus 5302 of the third light redirector. The second light projector 3 is positioned adjacent to (or close to) the second focus 5302 of the third light redirector. In this configuration, the range of variation in the projection direction can be maximized, ensuring that all light signals can be received by the second light direction modifier in the second light projector 3. Please note that in the present invention, the first focus 5301 of the third light redirector, the second focus 5302 of the third light redirector, and the first focus 401 of the second combiner are not aligned in a straight line (not collinear). In this way, these optical elements may be configured in a more compact manner, thereby reducing the final actual size of the head wearable display system. As shown in FIG. 21, in certain cases, to ensure that the viewer's eyes can benefit from the complete FOV created by the optical system of the present invention and to ensure that the viewer can see the entire image frame, the viewer's eyes are positioned adjacent to (or close to) the second focus 402 of the second combiner.

While a larger FOV is generally desired, however, it is well known that as the dispersion angle increases, the optical path difference between different light signals would also increase, leading to greater distortion of the image frame. In other words, the difference in optical path lengths between the plurality of light signals is a key factor contributing to the distortion of the image frame. Referring again to FIG. 21, to solve this issue, the present invention employs at least two light redirectors (namely, the third light redirector 530 and the second combiner 40) to balance the optical path length differences between the light signals. The geometry of the third light redirector 530 is designed to compensate for the optical path length differences, ensuring that the total optical path length of a light signal emitted by the second light projector 3 near the first spatial dimension limit (which corresponds to the edge of the image frame) to the viewer's second eye 60 is approximately equal to the total optical path length of another light signal emitted by the second light projector 3 near the second spatial dimension limit (which corresponds to the opposite edge of the image frame). By using this method, distortion between the edges of the image frame may be compensated. More specifically, referring to FIG. 21, the optical path length of the light signal S1 from the fourth light redirector 540 to the viewer's second eye 60 is $P_{13} + P_{14}$; the optical path length of the light signal S2 from the fourth light redirector 540 to the viewer's second eye 60 is $P_{23} + P_{24}$. In the case where $P_{13} + P_{14} > P_{23} + P_{24}$ (indicating that the optical path length of light signal S1 from the fourth light redirector 540 to the viewer's second eye 60 is greater than that of light signal S2), the geometry of the third light redirector 530 is configured such that $P_{11} + P_{12} < P_{21} + P_{22}$ (indicating that the optical path length of light signal S1 from the second light projector 3 to the fourth light redirector 540 is shorter than that of light signal S2). As a result, the total optical path length of light signal S1, $P_{11} + P_{12} + P_{13} + P_{14}$, is approximately equal to the total optical path length of light signal S2, $P_{21} + P_{22} + P_{23} + P_{24}$. Similarly, in the case where $P_{13} + P_{14} < P_{23} + P_{24}$, the geometry of the third light redirector 530 is configured such that $P_{11} + P_{12} > P_{21} + P_{22}$. The geometrical configuration of the optical elements described in the present invention (including the third light redirector 530, the fourth light redirector 540, and the second combiner 40) can refer to the radius of curvature of the optical element's surface, the shape of the optical element, the orientation of the optical element's major and minor axes, and/or the position of the optical element. In certain cases, the geometry of the optical elements can affect the focus position of the optical elements as well as other optical characteristics.

The method described above for eliminating distortion between the edges of the image frame can also be used to reduce distortion from other areas of the image frame. In some embodiments, the geometries of the third light redirector 530, the fourth light redirector 540, and the second combiner 40 can be configured such that the total optical path length of a certain second-eye light signal among the plurality of second-eye light signals emitted by the second light projector 3, which is not at the first spatial dimension limit and the second spatial dimension limit, to the viewer's second eye 60 is substantially equal to the total optical path length of the light signals emitted close to the first spatial dimension limit and the second spatial dimension limit.

For example, the surface of the third light redirector 530 that receives a plurality of second-eye light signals or the surface of the second combiner 40 that receives a plurality of second-eye light signals is an elliptical surface in the present embodiment; therefore, the surface may have at least two focuses. In some embodiments, the surface of the third light redirector 530 that receives a plurality of second-eye light signals or the surface of the second combiner 40 that receives a plurality of second-eye light signals is an elliptical surface. In some embodiments, both the surface of the third light redirector 530 that receives a plurality of second-eye light signals and the surface of the second combiner 40 that receives a plurality of second-eye light signals are elliptical surfaces. In some embodiments, the surface of the third light redirector that receives a plurality of second-eye light signals or the surface of the second combiner that receives a plurality of second-eye light signals may be aspheric surfaces or freeform surfaces. The surface of the third light redirector 530 and the surface of the second combiner 40 may have different radii of curvature; that is, these surfaces are part of ellipses with different major and/or minor axes. Although the third light redirector 530 and the second combiner 40 have different radii of curvature, in some embodiments, they can be integrated as a single-piece optical element. The fourth light redirector 540 is a reflector that reflects most of the light (more than 60% of the received light) to another direction. In other embodiments, the fourth light redirector 540 may be any reflective optical element that reflects most of the light (more than 60% of the received light) to another direction (for example, toward the second combiner 40). On the other hand, the third light redirector 530 or the second combiner 40 may at least partially allow ambient light to penetrate into the viewer's eye (second eye 60). In applications of the present invention as a head wearable display system or AR HWD, the fourth light redirector 540 may equivalent to a conventional synthesizer in AR HWD, allowing ambient light to pass through the fourth light redirector 540 into the viewer's eye. Therefore, it enables the creation of augmented images that include both virtual images and real-world images.

For the sake of clarity, the following provides specifications for the third light redirector 530 and the second combiner 40. The diameters of the third light redirector 530 and the second combiner 40 may be ranged from 10 mm to 40 mm, respectively. The distances from the centers of the third light redirector 530 and the second combiner 40 to the first focus and the second focus may be ranged from 10 mm to 20 mm and from 20 mm to 30 mm, respectively. The distance between the center of the third light redirector 530 and the center of the second combiner 40 is between 25 mm and 40 mm. The maximum FOV of the image frame may be approximately 60 degrees, and the suitable eye relief (the closest distance from the second combiner 40 to the viewer's second eye 60) in this embodiment is approximately 15 mm to 30 mm.

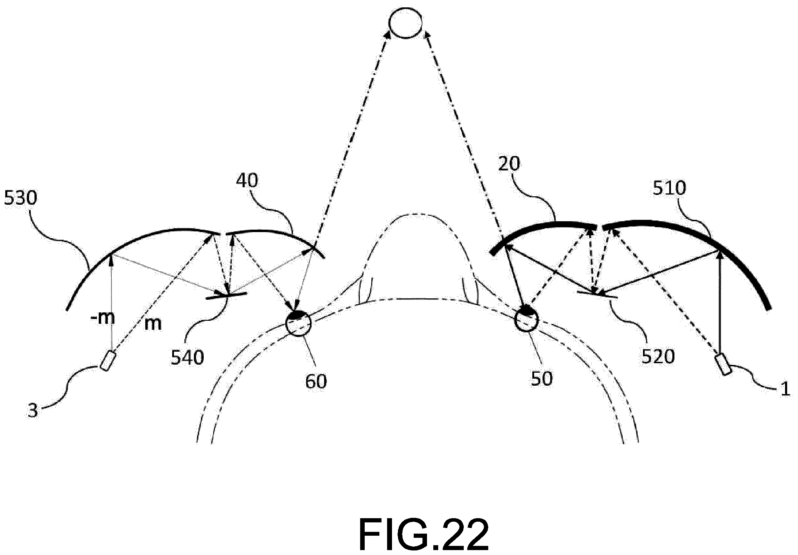

Referring to FIG. 22, which illustrates still another embodiment of the head wearable display system of the present invention. More specifically, different from the head wearable display system disclosed in FIG. 16, the head wearable display system shown in FIG. 22 further comprises light redirectors. It should be noted that although the head wearable display system disclosed in FIG. 22 is a binocular head wearable display system designed for the viewer's first eye 50 and second eye 60, in some embodiments, the head wearable display system shown in FIG. 22 may also be a single-eyed head wearable display system targeting either the viewer's first eye 50 or second eye 60 individually. Furthermore, for the viewer's first eye 50, the head wearable display system includes a first light projector 1 (which may include the aforementioned first light emitter, first collimator, first focusing element, and first light direction modifier), a first light redirector 510, a second light redirector 520, a first combiner 20, and the previously mentioned target object detection module, wherein the configuration and functions among the first light projector 1, first light redirector 510, second light redirector 520, and first combiner 20 are substantially the same as the configuration and functions among the second light projector 3, third light redirector 530, fourth light redirector 540, and second combiner 40, therefore the details would not be repeated here.

To present virtual images in three-dimensional space, the head wearable display system of the present invention needs to be applied to the viewer's two eyes. Theoretically, the head wearable display system for the viewer's two eyes (first eye 50 and second eye 60) should include the same optical elements. Referring to FIG. 22, the method for presenting virtual images in three-dimensional space is described below. The head wearable display system of the present invention may further comprise a first light projector 1 for emitting a plurality of first-eye light signals. Each light signal of the plurality of first-eye light signals has a corresponding second-eye light signal from a plurality of second-eye light signals. More specifically, the viewer's eyes can see each light signal of the plurality of first-eye light signals along with the corresponding second-eye light signal, forming binocular light signals through human visual fusion; as a result, the viewer perceives a single binocular light signal composed of a single first-eye light signal and its corresponding second-eye light signal. In this embodiment, the head wearable display system further includes a first light redirector 510 and a first combiner 20. The first light redirector 510 is used to receive a plurality of first-eye light signals and change the individual directions of the plurality of first-eye light signals, while the first combiner 20 may not only redirect and converge the plurality of first-eye light signals to the viewer's first eye 50, but also receive the plurality of first-eye light signals and change the individual directions of the plurality of first-eye light signals. Similar to the third light redirector 530 and the second combiner 40, the first light redirector 510 receives the plurality of first-eye light signals and directs the first-eye light signals toward the first combiner 20. The first combiner 20 directs the plurality of first-eye light signals received from the first light redirector 510 to the viewer's another eye (first eye 50), projecting the plurality of first-eye light signals onto the viewer's another retina. This allows the viewer to see a first virtual image and a second virtual image respectively composed of the plurality of first-eye light signals and the plurality of second-eye light signals, on a side of the second combiner 40 where the viewer's eye is located and the opposite side of the first combiner 20 where the other eye is located. The head wearable display system may further include a second light redirector 520 (equivalent to the aforementioned fourth light redirector 540) for receiving the plurality of first-eye light signals and changing the individual directions of the plurality of first-eye light signals. In this instance, the first light redirector 510 receives the plurality of first-eye light signals and directs the first-eye light signals to the second light redirector 520, the second light redirector 520 then directs the plurality of first-eye light signals received from the first light redirector 510 to the first combiner 20. The first combiner 20 then directs the plurality of first-eye light signals received from the second light redirector 520 to the viewer's another eye (first eye 50). In the present embodiment, the first light redirector 510 is equivalent to the third light redirector 530; the first combiner 20 is equivalent to the second combiner 40; and the second light redirector 520 is equivalent to the fourth light redirector 540.

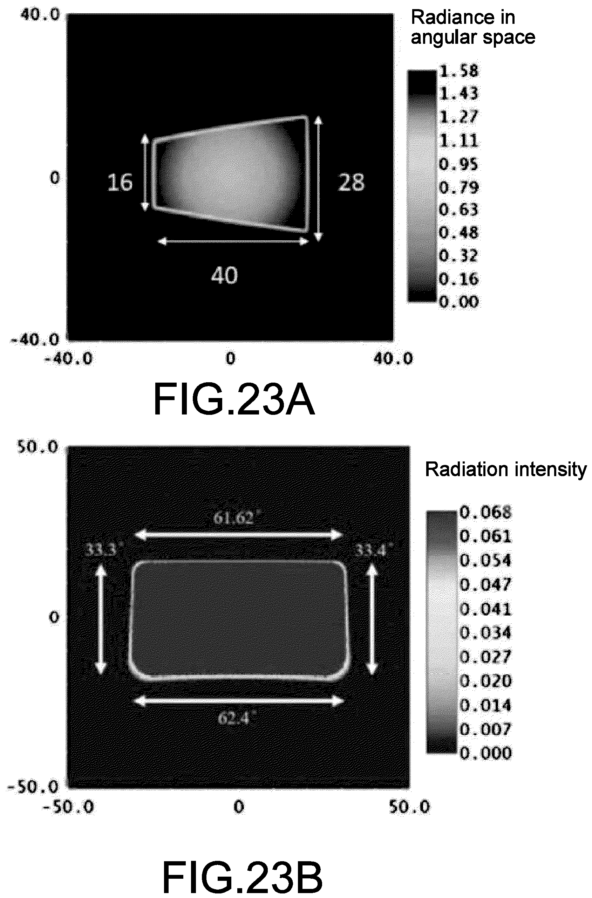

The following describes the distortion correction performance of the present invention. As previously mentioned, in some embodiments of the present invention, the image frame is substantially a quadrilateral with a first edge, a second edge, a third edge, and a fourth edge; the first edge and the third edge consist of the same number of light signals, while the second edge and the fourth edge consist of the same number of light signals. Referring to FIGs. 23A and 23B, for the sake of clarity, the present invention uses a rectangular image frame to demonstrate the performance of the head wearable display system shown in FIG. 22. FIG. 23A shows the distortion correction performance of a conventional optical system without digital correction. The final image frame exhibits severe distortion in the vertical FOV (for example, at the second edge and the fourth edge), resulting in the image frame being distorted into a trapezoid. The FOV ratio between the second edge and the fourth edge (which is the same as the length ratio) is approximately 0.57. FIG. 23B illustrates the distortion correction performance of the head wearable display system of the present invention as shown in FIG. 22 (also without digital correction). The image frame retains the expected rectangular shape, with the FOV ratio between the second edge and the fourth edge (which is the same as the length ratio) close to 1. The FOV ratio between the first edge and the third edge (horizontal FOV) also close to 1. For clarity, the measured ratio of the FOV (or length) of the first edge to the FOV (or length) of the third edge is 0.95 - 1.05; similarly, the ratio of the FOV (or length) of the second edge to the FOV (or length) of the fourth edge is also 0.95 - 1.05. It is obvious that the present invention does not require digital distortion correction for modifying small portions of the image frame. Therefore, by using the head wearable display system of the present invention as shown in FIG. 22, the complete image information of the image frame may be preserved (in terms of resolution and pixel number). In addition to the FOV, the design of the present invention may improve the light uniformity of light intensity across the entire image frame.

In addition, in some embodiments, the plurality of first-eye light signals emitted by the first light direction modifier in the first light projector 1 shown in FIG. 22 may be directed toward the first light redirector 510 with a first-eye incident angle, which may be ranged from 15 degrees to 75 degrees. Furthermore, in some embodiments, the plurality of second-eye light signals emitted by the second light direction modifier in the second light projector 3 shown in FIG. 22 may be directed toward the third light redirector 530 with a second-eye incident angle, which may also be ranged from 15 degrees to 75 degrees. Due to the different incident angles (either first-eye incident angle or second-eye incident angle) of the plurality of light signals (either the plurality of first-eye light signals or the plurality of second-eye light signals) emitted by the light direction modifiers (either the first light direction modifier or the second light direction modifier) toward the redirectors (either the first light redirector or the third light redirector), the corresponding exit angles and focal lengths would also be different. This will result in different spot sizes of the plurality of light signals on the viewer's retina (either the first eye or the second eye). Specifically, when the light direction modifier emits the plurality of light signals toward the light redirector with a larger incident angle, the corresponding exit angle is larger and the focal length is longer, resulting in larger spot sizes of the plurality of light signals on the retina; conversely, when the light direction modifier emits the plurality of light signals toward the light redirector with a smaller incident angle, the corresponding exit angle is smaller and the focal length is shorter, resulting in smaller spot sizes of the plurality of light signals on the retina.

The present invention is able to capture real time image pixels of a target object or the surrounding environment and reproduces a 3-dimensional digital image having enhanced image quality to a viewer of the AR/VR system. The viewer of the present invention can adjust the image quality to achieve better than normal VA (e.g., higher than 20/20 vision or VA 1.0). Furthermore, the present invention may help people with vision impairment or replace the traditional prescription eyeglasses to perform vision correction for people having myopia or hyperopia . . . etc. The present invention can be used by health care professionals, military personals, precision processing industry sectors, aerospace pilots, law enforcement personals, emergency and rescue personals, and athletes . . . etc.

The foregoing description of embodiments is provided to enable any person skilled in the art to make and use the subject matter. The method described herein can be performed in any orders. Various modifications to these embodiments will be readily apparent to those skilled in the art, and the novel principles and subject matter disclosed herein may be applied to other embodiments without the use of the innovative faculty. The claimed subject matter set fourth in the claims is not intended to be limited to the embodiments shown herein but is to be accorded the widest scope consistent with the principles and novel features disclosed herein. It is contemplated that additional embodiments are within the spirit and true scope of the disclosed subject matter. Thus, it is intended that the present invention covers modifications and variations that come within the scope of the appended claims and their equivalents.

## Claims

1. A head wearable display system, comprising:

   a target object detection module for receiving a plurality of image pixels of a first portion and a second portion of a target object, and corresponding depths of the first portion and the second portion;
   a first light emitter for emitting a plurality of first-eye light signals to display a first-eye virtual image of the first portion and the second portion of the target object for a viewer;
   a first light direction modifier for respectively varying a light direction of each of the plurality of first-eye light signals emitted from the first light emitter;
   a first collimator, disposed between the first light emitter and the first light direction modifier, to adjust a beam waist location of each of the plurality of first-eye light signals so that the plurality of first-eye light signals being separable from each other;
   a first focusing element, disposed between the first collimator and the first light direction modifier, to adjust a beam waist size of each of the plurality of first-eye light signals, so as to adjust spot sizes of the plurality of first-eye light signals on a first eye of the viewer; and
   a first combiner for redirecting and converging the plurality of first-eye light signals towards the first eye of the viewer.

2. The head wearable display system of claim 1, wherein the first-eye virtual image of the first portion of the target object in a first field of view comprises more amounts of the first-eye light signals per degree comparing to the first-eye virtual image of the second portion of the target object in a second field of view.

3. The head wearable display system of claim 1, wherein the first focusing element comprises a radius of curvature between -5 mm and -50 mm.

4. The head wearable display system of claim 1, wherein the plurality of first-eye light signals emitted by the first light direction modifier emits to the first combiner with a first-eye light incident angle between 15 degrees and 75 degrees.

5. The head wearable display system of claim 1, further comprising:

   a first light redirector for receiving the plurality of first-eye light signals and varying a light direction of each of the plurality of first-eye light signals; and
   a second light redirector disposed adjacent to a first focus of the first light redirector and a first focus of the first combiner, the second light redirector being a reflector,
   wherein the first light redirector receives the plurality of first-eye light signals and directs the plurality of first-eye light signals to the first combiner, the first combiner directs the plurality of first-eye light signals received from the first light redirector to the first eye of the viewer, so that the viewer sees a first image frame composed by the plurality of first-eye light signals,

wherein the first light direction modifier varies projecting directions of the plurality of first-eye light signals in a first dimension between a first spatial dimension limit and a second spatial dimension limit,

wherein a geometric shape of the first light redirector is configured to make the total optical path length from the first light direction modifier to the first eye of the viewer of one of the plurality of first-eye light signals emitted by the first light direction modifier approximate to the first spatial dimension limit substantially equal to the total optical path length from the first light direction modifier to the first eye of the viewer of another one of the plurality of first-eye light signals emitted by the first light direction modifier approximate to the second spatial dimension limit,

wherein the first light redirector comprises two focuses located in space between the first light redirector and the first eye of the viewer, the first focus of the first light redirector and the first focus of the first combiner are at a same spatial location,

wherein the first light direction modifier is adjacent to a second focus of the first light redirector, and

wherein a closest distance from the first combiner to the first eye of the viewer is 15 mm to 30 mm.

6. The head wearable display system of claim 5, wherein the plurality of first-eye light signals emitted by the first light direction modifier is emitted to the first light redirector with a first eye-light incident angle, and the first eye-light incident angle is between 15 degrees and 75 degrees.

7. The head wearable display system of claim 1, wherein an amount of distinguishable light signals per unit of field of view projected to a retina of the viewer is adjusted by varying a distance between the first light direction modifier and the first collimator.

8. The head wearable display system of claim 1, wherein an amount of distinguishable light signals per unit of field of view projected to a retina of the viewer is modulated by varying a distance between the first focusing element and the first light emitter.

9. The head wearable display system of claim 1, further comprising:

a second light emitter for emitting a plurality of second-eye light signals corresponding to the plurality of first-eye light signals to display a second-eye virtual image of the first portion and the second portion of the target object for the viewer;

a second light direction modifier for respectively varying a light direction of each of the plurality of second-eye light signals emitted from the second light emitter;

a second collimator, disposed between the second light emitter and the second light direction modifier, to adjust a beam waist location of each of the plurality of second-eye light signals so that the plurality of second-eye light signals being separable from each other;

a second focusing element, disposed between the second collimator and the second light direction modifier, to adjust a beam waist size of each of the plurality of second-eye light signals, so as to adjust spot sizes of the plurality of second-eye light signals on a second eye of the viewer; and

a second combiner for redirecting and converging the plurality of second-eye light signals towards the second eye of the viewer;

wherein the first eye and the second eye perceive the plurality of first-eye light signals and the plurality of second-eye light signals to produce binocular vision, one of the plurality of first-eye light signals and corresponding one of the plurality of second-eye light signals form a binocular pixel having a first depth related to a converging angle between optical path extensions of one of the plurality of first-eye light signals and corresponding one of the plurality of second-eye light signals.

10. The head wearable display system of claim 9, wherein the second focusing element comprises a radius of curvature between -5 mm and -50 mm.

11. The head wearable display system of claim 9, wherein the plurality of second-eye light signals emitted by the second light direction modifier emits to the second combiner with a second-eye light incident angle between 15 degrees and 75 degrees.

12. The head wearable display system of claim 9, further comprising:

a third light redirector for receiving the plurality of second-eye light signals and varying a light direction of each of the plurality of second-eye light signals; and

a fourth light redirector disposed adjacent to a first focus of the third light redirector and a first focus of the second combiner, the fourth light redirector being a reflector,

wherein the third light redirector receives the plurality of second-eye light signals and directs the plurality of second-eye light signals to the second combiner, the second combiner directs the plurality of second-eye light signals received from the third light redirector to the second eye of the viewer, so that the viewer sees a second image frame composed by the plurality of second-eye light signals,

wherein the second light direction modifier varies projecting directions of the plurality of second-eye light signals in a second dimension between a third spatial dimension limit and a fourth spatial dimension limit,

wherein a geometric shape of the third light redirector is configured to make the total optical path length from the second light direction modifier to the second eye of the viewer of one of the plurality of second-eye light signals emitted by the second light direction modifier approximate to the third spatial dimension limit substantially equal to the total optical path length from the second light direction modifier to the second eye of the viewer of another one of the plurality of second-eye light signals emitted by the second light direction modifier approximate to the fourth spatial dimension limit,

wherein the third light redirector comprises two focuses located in space between the third light redirector and the second eye of the viewer, the first focus of the third light redirector and the first focus of the second combiner are at a same spatial location,

wherein the second light direction modifier is adjacent to a second focus of the third light redirector, and

wherein a closest distance from the second combiner to the second eye of the viewer is 15 mm to 30 mm.

13. The head wearable display system of claim 12, wherein the plurality of second-eye light signals emitted by the second light direction modifier is emitted to the third light redirector with a second eye-light incident angle between 15 degrees and 75 degrees.

FIG.1

EP 4 610 715 A1

FIG.2

# FIG.3

# FIG.4A

# FIG.4B

FIG.5A

FIG.5B

Light signal pulse

time

EP 4 610 715 A1

**FIG.6**

10

FIG.7A

FIG.7B

10

FIG.7C

FIG.8

**FIG.9**

EP 4 610 715 A1

FIG.10

# FIG.11

FIG.12

EP 4 610 715 A1

FIG.13

EP 4 610 715 A1

FIG.14

FIG.15

FIG.16

EP 4 610 715 A1

**Equivalent Lens**

Collimator

Focusing Element

Light Direction Modifier

Light Emitter

# FIG.17

FIG.18A

FIG.18B

FIG.18C

FIG.19A

FIG.19B

FIG.19C

FIG.20

FIG.21

FIG.22

FIG.23A

FIG.23B

Europäisches
Patentamt

European
Patent Office

Office européen
des brevets

## EUROPEAN SEARCH REPORT

**Application Number**

EP 25 16 0227

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/049899 A1 (YEH FENG-CHUN [TW] ET AL) 16 February 2023 (2023-02-16) | 1-4, 6-11,13 | INV. G02B27/01 |
| Y | * figures 9, 14 *<br>* claim 1 *<br>* paragraph [0059] * | 5,12 | |
| A | US 2010/060551 A1 (SUGIYAMA KEIJI [JP] ET AL) 11 March 2010 (2010-03-11)<br>* figure 15 * | 3,8,10 | |
| Y | US 2023/314805 A1 (CHENG KEN-YU [TW] ET AL) 5 October 2023 (2023-10-05) | 5,12 | |
| A | * figures 4, 5 *<br>* claims 1, 4, 6 * | 4,6,11, 13 | |

| | TECHNICAL FIELDS SEARCHED (IPC) |
|---|---|
| | G02B |

The present search report has been drawn up for all claims

| Place of search | Date of completion of the search | Examiner |
|---|---|---|
| Munich | 22 July 2025 | Serbin, Jesper |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 0227

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2025

| Patent document cited in search report | Publication date | Patent family member(s) | | Publication date |
|---|---|---|---|---|
| US 2023049899 A1 | 16-02-2023 | CN | 115280219 A | 01-11-2022 |
| | | EP | 4094120 A1 | 30-11-2022 |
| | | JP | 7601521 B2 | 17-12-2024 |
| | | JP | 2023553225 A | 21-12-2023 |
| | | TW | 202305452 A | 01-02-2023 |
| | | US | 2023049899 A1 | 16-02-2023 |
| | | US | 2025166220 A1 | 22-05-2025 |
| | | WO | 2022170284 A1 | 11-08-2022 |
| US 2010060551 A1 | 11-03-2010 | CN | 101589327 A | 25-11-2009 |
| | | JP | 5216761 B2 | 19-06-2013 |
| | | JP | WO2009041055 A1 | 20-01-2011 |
| | | US | 2010060551 A1 | 11-03-2010 |
| | | WO | 2009041055 A1 | 02-04-2009 |
| US 2023314805 A1 | 05-10-2023 | CN | 116057450 A | 02-05-2023 |
| | | EP | 4204895 A1 | 05-07-2023 |
| | | TW | 202318072 A | 01-05-2023 |
| | | US | 2023314805 A1 | 05-10-2023 |
| | | WO | 2023278465 A1 | 05-01-2023 |

EPO FORM P0459

For more details about this annex : see Official Journal of the European Patent Office, No. 12/82